# EUROPEAN PATENT APPLICATION

(11) **EP 4 546 906 A1**
(43) Date of publication of application: **30.04.2025**
(21) Application number: 23846808.6
(22) Date of filing: 15.06.2023
(51) Int. Cl.: H04W 64/00, H04W 4/02, H04W 4/029, H04W 24/08, H04W 92/18

(54) **METHOD AND DEVICE FOR CONTROLLING SIDELINK POSITIONING PROCEDURE IN WIRELESS COMMUNICATION SYSTEM**

(30) Priority: 27.07.2022 KR 20220093115
(71) Applicant: Samsung Electronics Co., Ltd., Suwon-si, Gyeonggi-do 16677 (KR)
(72) Inventor: LEE, Taeseop, Suwon-si, Gyeonggi-do 16677 (KR); KANG, Hyunjeong, Suwon-si, Gyeonggi-do 16677 (KR); YU, Jeongseok, Suwon-si, Gyeonggi-do 16677 (KR)
(74) Representative: Gulde & Partner
(86) International application number: PCT/KR2023/008249
(87) International publication number: WO 2024/025149

(57) **Abstract**

The present disclosure relates to a communication technique that merges IoT technology with a 5G communication system for supporting higher data transmission rates than 4G systems, and a system therefor. The present disclosure may be applied to intelligent services (for example, smart homes, smart buildings, smart cities, smart cars or connected cars, healthcare, digital education, retail business, security and safety-related services, etc.) based on 5G communication technology and IoT-related technology. Disclosed are a method and device for servicing sidelink positioning in a wireless communication system.

## Description

### [Technical Field]

The disclosure relates to a method and a device for providing sidelink positioning services in a mobile communication system.

### [Background Art]

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system. The 5G communication system is considered to be implemented in ultrahigh frequency (mmWave) bands, (e.g., 60GHz bands) so as to accomplish higher data rates. To decrease propagation loss of the radio waves and increase the transmission distance of radio waves in the ultrahigh frequency bands, beamforming, massive multiple-input multiple-output (massive MIMO), full dimensional MIMO (FD-MIMO), array antenna, analog beam forming, large scale antenna techniques are under discuss ion in the 5G communication systems. In addition, in the 5G communication system, technical development for system network improvement is under way based on evolved small cells, advanced small cells, cloud radio access networks (cloud RANs), ultra-dense networks, device-to-device (D2D) communication, wireless backhaul, moving network, cooperative communication, coordinated multi-points (CoMPs), reception-end interference cancellation, and the like. In the 5G system, hybrid FSK and QAM modulation (FQAM) and sliding window superposition coding (SWSC) as an advanced coding modulation (ACM) scheme, and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have recently been researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply the 5G communication system to IoT networks. For example, technologies such as a sensor network, machine type communication (MTC), and machine-to-machine (M2M) communication are implemented by beamforming, MIMO, and array antenna techniques that are 5G communication technologies. Application of a cloud radio access network (cloud RAN) as the above-described big data processing technology may also be considered an example of convergence of the 5G technology with the IoT technology.

In order to provide services in a mobile communication system, a base station needs to support sidelink positioning of a terminal within a communication range.

### [Disclosure of Invention]

### [Technical Problem]

An aspect of the disclosure is to provide a device and a method capable of effectively providing services in a next-generation wireless communication system.

### [Solution to Problem]

A method of a location management function (LMF) entity in a communication system according to an example of the disclosure to achieve the task above may include: receiving, from an access and mobility management function (AMF) entity, a request message requesting a location of a target terminal related to a sidelink positioning (SL-P) procedure; transmitting, to the target terminal, a discovery request message requesting discovery of an anchor terminal; receiving, from the target terminal, a discovery response message including information on candidate anchor terminals, in response to the discovery request message; and selecting at least one anchor terminal for performing the SL-P procedure from among the candidate anchor terminals.

In addition, a method of a target terminal in a communication system according to an example of the disclosure may include:
receiving, from a location management function (LMF) entity, a discovery request message requesting discovery of an anchor terminal related to a sidelink positioning (SL-P) procedure;
performing a discovery operation based on the discovery request message; and transmitting, to the LMF entity, a discovery response message in response to the discovery request message, the discovery response message including information on candidate anchor terminals based on the discovery operation.

In addition, a location management function (LMF) entity in a communication system according to an example of the disclosure may include a communication unit, and a controller configured to: control the communication unit to receive, from an access and mobility management function (AMF) entity, a request message requesting a location of a target terminal related to a sidelink positioning (SL-P) procedure; control the communication unit to transmit, to the target terminal, a discovery request message requesting discovery of an anchor terminal; control the communication unit to receive, from the target terminal, a discovery response message including information on candidate anchor terminals, in response to the discovery request message; and select at least one anchor terminal for performing the SL-P procedure from among the candidate anchor terminals.

In addition, a target terminal in a communication system according to an example of the disclosure may include a transceiver, and a controller configured to: control the transceiver to receive, from a location management function (LMF) entity, a discovery request message requesting discovery of an anchor terminal related to a sidelink positioning (SL-P) procedure; perform a discovery operation based on the discovery request message; and control the transceiver to transmit, to the LMF entity, a discovery response message in response to the discovery request message, the discovery response message including information on candidate anchor terminals based on the discovery operation.

### [Advantageous Effects of Invention]

According to embodiments of the disclosure, services can be effectively provided in a next-generation wireless communication system.

### [Brief Description of Drawings]

FIG. 1 is a diagram illustrating a structure of an NR system according to an embodiment of the disclosure;
FIG. 2 is a diagram illustrating a radio protocol structure in LTE and NR systems according to an embodiment of the disclosure;
FIG. 3 is a diagram illustrating a network structure for providing LCS in a next-generation mobile communication system according to an embodiment of the disclosure;
FIG. 4 is a flowchart of a procedure of performing an LCS in the next-generation mobile communication system according to an embodiment of the disclosure;
FIG. 5 is a flowchart of a detailed LPP message exchange procedure of a UE procedure according to an embodiment of the disclosure;
FIG. 6 is a diagram illustrating an SL-P service scenario according to an embodiment of the disclosure;
FIG. 7 is a diagram illustrating a scenario in which, when SL-P is performed, an LMF may be involved in a specific SL-P configuration and an anchor UE to be used for location estimation of a target UE according to an embodiment of the disclosure;
FIG. 8 is a flowchart of a procedure in which an LMF controls overall SL-P procedures according to an embodiment of the disclosure;
FIG. 9 is a flowchart of an anchor UE information registration procedure using MT-LR and NI-LR procedures according to an embodiment of the disclosure;
FIG. 10 is a flowchart of an anchor UE information registration procedure using an MO-LR procedure according to an embodiment of the disclosure;
FIG. 11 is a flowchart of a procedure in which an LMF acquires information required for SL-P configuration via LPP signaling with anchor UEs during an SL-P service procedure control according to an embodiment of the disclosure;
FIG. 12 is a flowchart of a procedure of performing SL-P when an LCS client requests an SL-P operation between one or more pairs of UEs according to an embodiment of the disclosure;
FIG. 13 is a diagram for describing a method of determining a location estimation scheme and an anchor UE to be used for SL-P according to an embodiment of the disclosure;
FIG. 14 is a diagram for describing a method of determining a specific location estimation scheme and an anchor UE to be used for SL-P according to an embodiment of the disclosure;
FIG. 15 is a flowchart of a procedure in which an LMF determines a location estimation scheme and an anchor UE to be used for SL-P when an LCS client requests location information of a specific target UE according to an embodiment of the disclosure;
FIG. 16 is a diagram illustrating a UE device according to an embodiment of the disclosure;
FIG. 17 is a diagram illustrating a base station device according to an embodiment of the disclosure; and
FIG. 18 is a block diagram associated with a structure of an LMF entity according to an example of the disclosure.

### [Mode for the Invention]

Hereinafter, embodiments of the disclosure will be described in detail with reference to the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description of the disclosure, a detailed description of known functions or configurations incorporated herein will be omitted when it is determined that the description may make the subject matter of the disclosure unnecessarily unclear. Hereinafter, various embodiments of the disclosure will be described with reference to the accompanying drawings. In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, upper signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

In the following description of the disclosure, terms and names defined in the 3rd generation partnership project new radio (3GPP NR) or 3GPP long term evolution (3GPP LTE) standards will be used for the sake of descriptive convenience. However, the disclosure is not limited by these terms and names, and may be applied in the same way to systems that conform other standards. In the disclosure, the term "gNB" may be interchangeably used with the term "eNB" for the sake of descriptive convenience. That is, a base station described as "eNB" may refer to "gNB". Furthermore, the term "terminal" may refer to not only a mobile phone, an MTC device, an NB-IoT device, and a sensor, but also other wireless communication devices.

In the following description, a base station is an entity that allocates resources to terminals, and may be at least one of a gNode B (gNB), an eNode B (eNB), a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above. The disclosure relates to a method and a device for performing sidelink (SL) positioning in a mobile communication system. More specifically, the disclosure relates to a method and a device for performing sidelink positioning (SL-P) by a UE within a base station communication range in 3GPP 5GS.

The disclosure describes a method and a procedure for a network to control a procedure required for a UE within a base station communication range to perform SL-P. To this end, specifically, information related to an anchor UE (UE capability information, sidelink information, and known location information) which may assist in SL-P for estimating a location of a specific target UE is defined, and a method and a procedure for a network to obtain the corresponding information are described. In addition, a method for determining whether to use SL-P for estimating a location of a target UE is described. In addition, descriptions are provided for a method and a procedure for determining an anchor UE to be used in SL-P, a location estimation technique (e.g., a round trip transmission (RTT)-type solution using an SL, an SL-angle of arrival (AoA), an SL-time difference of arrival (TDOA), and an SL-angle of departure (AoD)), a location estimation mode (e.g., a standalone, UE-based, or UE-assisted mode), and an SL-P operation configuration (e.g., SL-PRS transmission and reception operation configuration, RTT/TDOA/AoA/AoD measurement operation configuration, and result reporting operation configuration).

Via the disclosure, a network may indicate UEs within a base station communication range to perform SL-P. Mobile originated location request (MO-LR), mobile terminated location request (MT-LR), and network induced location request (NI-LR) procedures may be used to register information on an anchor UE available for SL-P in a location management function (LMF). In addition, the location management function (LMF) may open a separate LTE positioning protocol (LPP) session and exchange an LPP message with each of anchor UEs in order to obtain information on an available anchor UE during an SL-P procedure for estimating a location of a target UE. The LMF may indicate an anchor UE discovery operation to the target UE to identify available anchor UEs around the target UE, and the target UE may perform the anchor UE discovery operation and then report a result thereof to the LMF. The LMF may be involved in
determination of an anchor UE, which is to be used when performing SL-P for estimating the location of the target UE, based on the obtained anchor UE-related information, determination of a location estimation technique, determination of a location estimation mode, determination of a specific SL-P operation configuration, etc.

The terms used in the disclosure may be defined as follows.
- Sidelink positioning (SL-P): Estimating a location of a UE by using a reference signal transmitted on an SL. In this case, the location of the UE may be absolute position information (absolute positioning), relative position information, and ranging information (e.g., distance/direction information with respect to another UE). A ranging operation (estimation of distance/direction/relative location between UEs) may be included in the concept of SL-P.
- Target UE: A UE that is a target of location estimation.
- Anchor UE: A UE that assists in estimating a location of a target UE. (e.g., a UE that transmits and receives a reference signal for estimating a location of a target UE, a UE that transfers information required for location estimation to a target UE via an SL, etc.)
- Reference UE: A UE that determines a reference plane and a reference direction in ranging and SL-P services.
- Assistant UE: A UE that assists when direct ranging and SL-P between a reference UE and a target UE are impossible.
- Located UE: A UE that has a known location or has a location identifiable via a Uu interface-based location estimation technique. The located UE may be used for location estimation of a target UE by using SL-P.

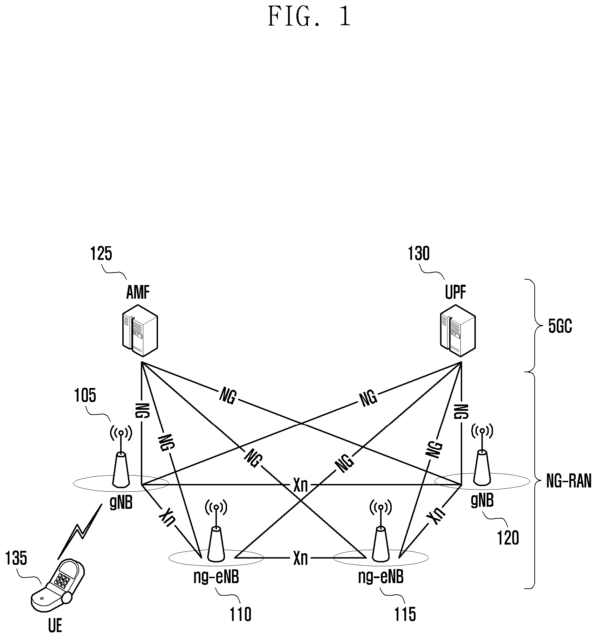

FIG. 1 is a diagram illustrating a structure of an NR system according to an embodiment of the disclosure.

Referring to FIG. 1, a wireless communication system may include multiple base stations (e.g., a gNB 105, an ng-eNB 110, an ng-eNB 115, and a gNB 120), an access and mobility management function (AMF) 125, and a user plane function (UPF) 130. A user equipment (hereinafter, UE or terminal) 135 may access an external network via the base stations (e.g., the gNB 105, the ng-eNB 110, the ng-eNB 115, and the gNB 120) and the UPF 130.

In FIG. 1, the base stations (e.g., the gNB 105, the ng-eNB 110, the ng-eNB 115, and the gNB 120) are access nodes of a cellular network and may provide radio access to UEs accessing the network. That is, in order to service traffic of users, the base stations (e.g., the gNB 105, the ng-eNB 110, the ng-eNB 115, and the gNB 120) may collect state information, such as buffer states, available transmission power states, and channel states, of UEs and perform scheduling to support connections between the UEs and a core network (CN, in particular, CN of new radio (NR) is referred to as 5GC). In communication, a user plane (UP) related to actual user data transmission and a control plane (CP), such as connection management, may be divided and configured. In this drawing, the gNBs 105 and 120 use the UP and CP technologies defined in the NR technology, and although the ng-eNBs 110 and 115 are connected to 5GC, the ng-eNBs 110 and 115 may use the UP and CP technologies defined in long-term evolution (LTE) technology.

The AMF 125 is a device responsible for various control functions as well as a mobility management function for a UE and is connected to the multiple base stations, and the UPF 130 may refer to a type of gateway device that provides data transmission. Although not illustrated in FIG. 1, the NR wireless communication system may include a session management function (SMF). The SMF may manage a packet data network connection, such as a protocol data unit (PDU) session provided to a UE.

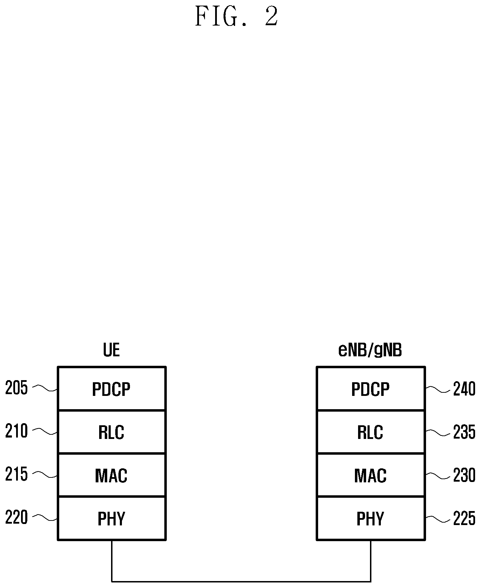

FIG. 2 is a diagram illustrating a radio protocol structure in LTE and NR systems according to an embodiment of the disclosure.

Referring to FIG. 2, a radio protocol of the LTE system may include packet data convergence protocols (PDCPs) 205 and 240, radio link controls (RLCs) 210 and 235, and medium access controls (MACs) 215 and 230 in a UE and an eNB, respectively.

The packet data convergence protocols (PDCPs) 105 and 140 are responsible for an operation, such as IP header compression/reconstruction, and the radio link controls (RLCs) 210 and 235 reconfigure a PDCP protocol data unit (PDU) to be an appropriate size. The MACs 215 and 230 are connected to multiple RLC layer devices included in one UE, and perform multiplexing of RLC PDUs on an MAC PDU and demultiplexing of the RLC PDUs from the MAC PDU. Physical (PHY) layers 220 and 225 perform channel coding and modulation on higher-layer data, convert the data into orthogonal frequency division multiplexing (OFDM) symbols and transmit the same via a wireless channel, or perform demodulation and channel decoding on the OFDM symbols received via the wireless channel and transfer the same to a higher layer. In addition, the physical layers also use a hybrid automatic repeat request (HARQ) for additional error correction, and a reception end transmits 1 bit to indicate whether a packet transmitted by a transmission end has been received. This is referred to as HARQ acknowledgement (ACK)/negative-ACK (NACK) information. In LTE, downlink HARQ ACK/NACK information for uplink data transmission is transmitted via a physical hybrid-ARQ indicator channel (PHICH) that is a physical channel, and in NR, whether retransmission is necessary or whether to perform new transmission may be determined via scheduling information of a corresponding UE in a physical dedicated control channel (PDCCH) that is a channel via which downlink/uplink resource allocation, etc. are transmitted. This is because asynchronous HARQ is applied in NR. Uplink HARQ ACK/NACK information for downlink data transmission may be transmitted via a physical channel, such as a physical uplink control channel (PUCCH) or a physical uplink shared channel (PUSCH). The PUCCH is generally transmitted in an uplink of a primary cell (PCell), which will be described later. However, when supported by a UE, a base station may perform additional transmission to the UE in a secondary cell (SCell), which will be described later, and the SCell in this case is referred to as a PUCCH SCell.

Although not illustrated in FIG. 2, a radio resource control (RRC) layer is present above the PDCP layer of each of the UE and the base station, and the RRC layer may exchange access and measurement-related configuration control messages for radio resource control.

The PHY layer may include one or multiple frequencies/carriers, and a technology of concurrently configuring and using multiple frequencies is referred to as a carrier aggregation (CA) technology. In the CA technology, instead of using only one carrier for communication between a terminal (or user equipment (UE)) and a base station (E-UTRAN NodeB (eNB)), a primary carrier and one or multiple additional secondary carriers may be used so that a transmission capacity may be dramatically increased by the number of the secondary carriers. In LTE, a cell in a base station, which uses a primary carrier, is referred to as a main cell or a primary cell (PCell), and a cell in a base station, which uses a sub-carrier, is referred to as a sub-cell or a secondary cell (SCell).

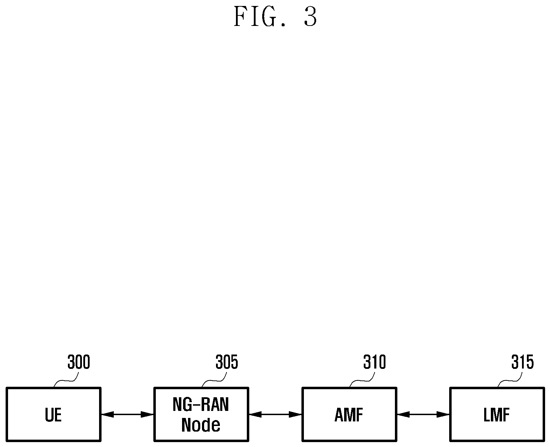

FIG. 3 is a diagram illustrating a network structure for providing location services (LCS) in a next-generation mobile communication system according to an embodiment of the disclosure. Referring to FIG. 3, a network for providing an LCS in a next-generation mobile communication system includes a UE 300, a base station (NG-RAN node) 305, an access and mobility management function (AMF) 310, and a location management function (LMF) 315. In this case, the UE 300 communicates with the LMF 315 via the base station 305 and the AMF 310, and exchanges information required for location estimation. Roles of the respective components for providing the LCS are as follows.

The UE (terminal) 300 perform roles of measuring a radio signal required for location estimation, and transmitting a result thereof to the LMF 315.

The base station 305 may perform roles of transmitting a downlink radio signal required for location estimation, measuring an uplink wireless signal transmitted by a target UE, etc.

The AMF 310 may perform roles of receiving an LCS request message from an LCS requester, and then transferring the same to the LMF 315 so as to indicate provision of a location provision service. When the LMF 315 processes a location estimation request and then transmits a response for a location estimation result of the UE, the AMF 310 may transfer the result to the LCS requester.

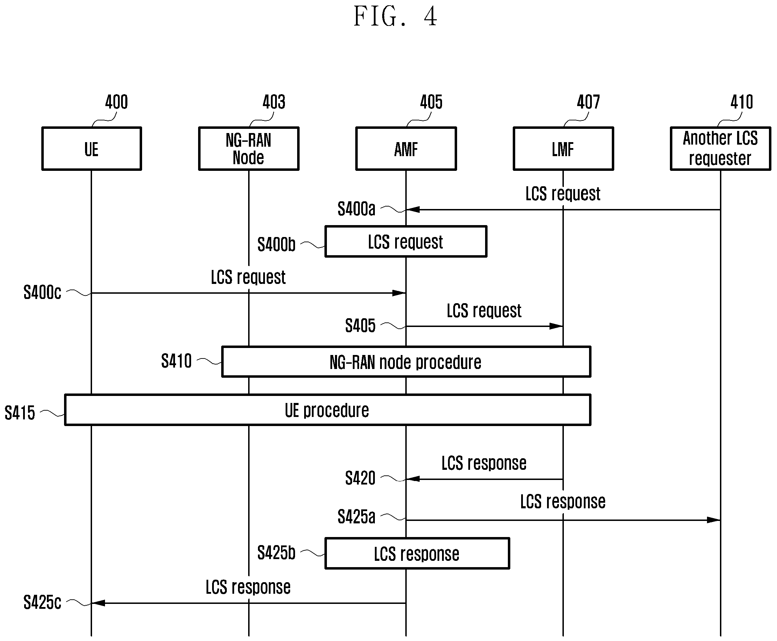

The LMF 315 is a device that receives and processes an LCS request from the AMF 310, and may perform a role of controlling overall procedures required for location estimation. The LMF 315 provides the UE 300 with assistance information required for location estimation and signal measurement for UE location estimation, and receives a result value thereof, and in this case, an LTE positioning protocol (LPP) may be used as a protocol for data exchange. The LPP may define specifications of a message exchanged between the UE 300 and the LMF 315 for the location estimation service. In addition, the LMF 315 may exchange, with the base station 305, downlink reference signal (PRS) configuration information and an uplink reference signal (SRS) measurement result, which will be used for location estimation. In this case, NR positioning protocol A (NRPPa) may be used as a protocol for data exchange, and NRPPa may define specifications of a message exchanged between the base station 305 and the LMF 315. FIG. 4 is a flowchart of a procedure of performing an LCS in the next-generation mobile communication system according to an embodiment of the disclosure.

Referring to FIG. 4, after acquiring an LCS request S400a/S400b/S400c, an AMF 405 may transfer the same to an LMF 407. Then, the LMF 407 may control a procedure of exchanging necessary information with a UE and a base station in order to process the LCS request S400a/S400b/S400c, and may transfer a result value thereof (a location estimation result) to the AMF 405. The AMF 405 may transfer the result value to a target 410 that has requested an LCS, thereby completing execution of the LCS.

There are three types of LCS requests received by the AMF 405 in step S400.
1. LCS request S400a received from the external LCS client 410
2. LCS request S400b generated by the AMF 405 itself
3. LCS request S400c received from the UE 400

The LCS request may include an identity (ID) of the LCS target UE and LCS quality of service (QoS) request information (e.g., requirements for location estimation accuracy and delay time). After acquiring one of the three types of LCS requests, the AMF 405 may request providing of a location estimation service, by transmitting a location service request message S405 to the LMF 407. Then, in an NG-RAN node procedure step S410, the LMF 407 may perform procedures required for location estimation (e.g., configuring a PRS for the base station, acquiring SRS measurement information from the base station, etc.) via NRPPa message exchange with the NG-RAN node 403.

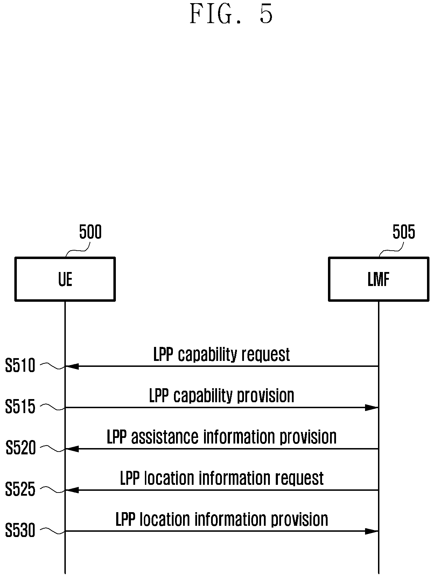

In addition, in a UE procedure step S415, the LMF 407 may exchange an LPP message to exchange necessary information with the UE 400. Via the procedure, the LMF 407 may perform operations, such as exchanging UE capability information related to location estimation, transferring assistance information for signal measurement of the UE, requesting UE measurement results, and acquiring the UE measurement results, thereby performing the corresponding procedure. In relation to this, more detailed descriptions will be provided later with reference to FIG. 5.

When an estimated location of the UE is determined based on various measurement results acquired by the LMF 407, the LMF 407 may transfer a location service response message S420 to the AMF 405 based on the estimated location. The AMF 405 may transfer an LCS response message S425a/S425b/S425c to the target having requested the LCS, and the LCS response message S425a/S425b/S425c may include a location estimation result of the UE.

FIG. 5 is a flowchart of a detailed LPP message exchange procedure of a UE procedure according to an embodiment of the disclosure.

Referring to FIG. 5, a UE procedure according to an embodiment of the disclosure may include procedures of exchanging UE capability information related to location estimation between an LMF 505 and a UE 500, transferring assistance information for signal measurement of the UE, requesting UE measurement results, and then acquiring the same, etc. More specifically, the purpose and definition of each LPP message exchanged at each step are as follows.

LPP capability request (LPP request capabilities) (LMF → UE, S510)
: This is a message available for the LMF 505 to request UE capability information related to location estimation from the UE 500. Information included in the message may be defined as in [Table 1] below. Referring to [Table 1], a request for common information regardless of a location estimation method (e.g., a global navigation satellite system (GNSS), an observed time difference of arrival (OTDOA), an enhanced cell ID (ECID), etc.) is included in CommonIEsRequestCapabilities, and a request for additional information required for each location estimation method may be included in a separate information element (IE) for each method.

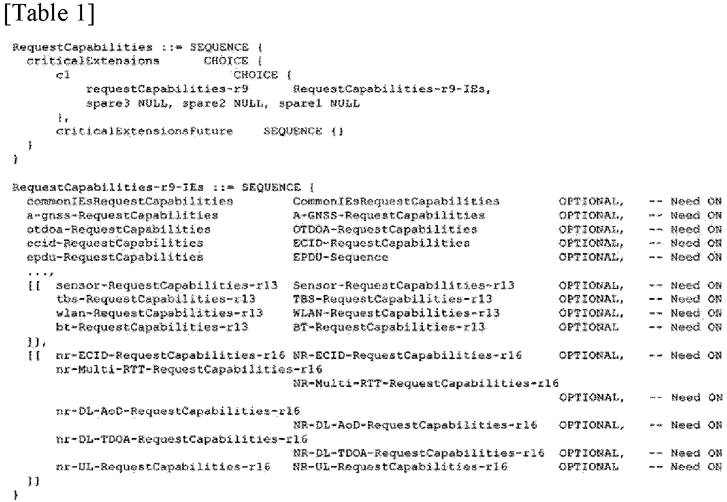

LPP capability provision (LPP provide capabilities) (LMF → UE, S515)
: This is a message available for the UE 500 to transfer UE capability information requested by the LMF 505. Information included in the message may be defined as in [Table 2] below. Referring to [Table 2], similar to the LPP request capabilities message, information that is commonly applied regardless of the location estimation method is included in commonIEsProvideCapabilities, and information additionally requested for each location estimation scheme may be included in separate IEs.

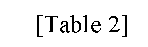

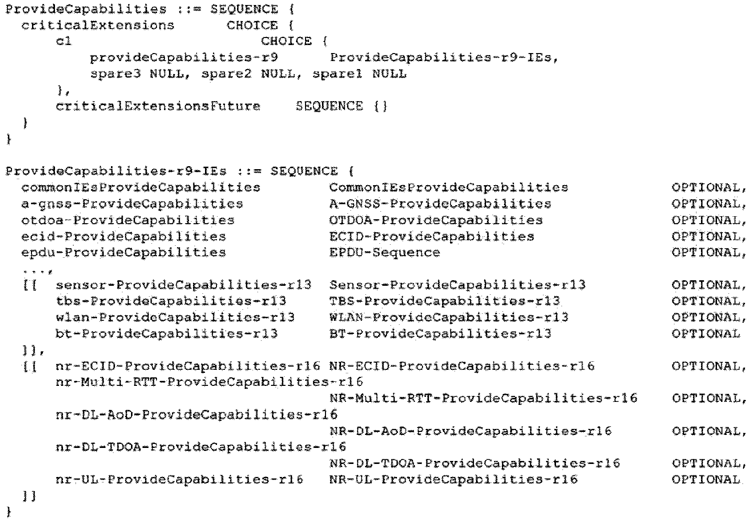

LPP assistance information provision (LPP ProvideAssistanceData) (LMF → UE, S520)
: This is a message available for the LMF 505 to provide information that is required or helpful for the UE 500 to measure a radio signal for location estimation. Information included in the message may be defined as in [Table 3] below.

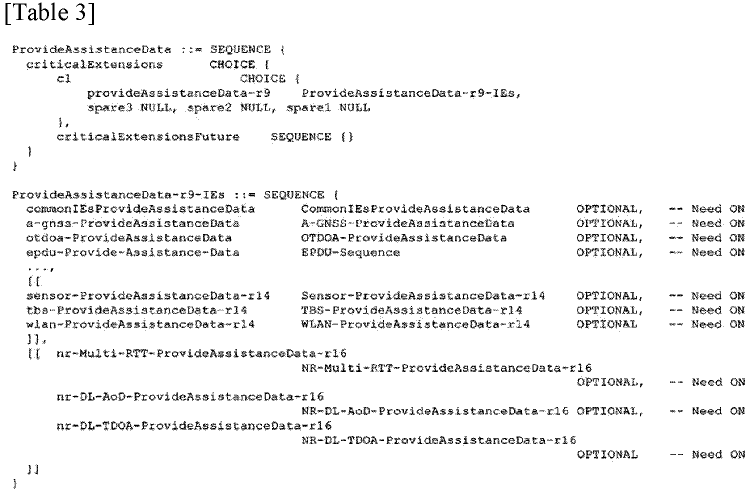

LPP location information request (LPP request location information) (LMF → UE, S525)
: This is a message available for the LMF 505 to request signal measurement required for location estimation and a location estimation result from the UE 500. The LMF 505 may determine which location estimation method to be used, which measurement the UE should perform for this, or how to respond with which result, and then may transmit relevant information to the UE 500 by including the information in the message. The information included in the message may be defined as in [Table 4] below.

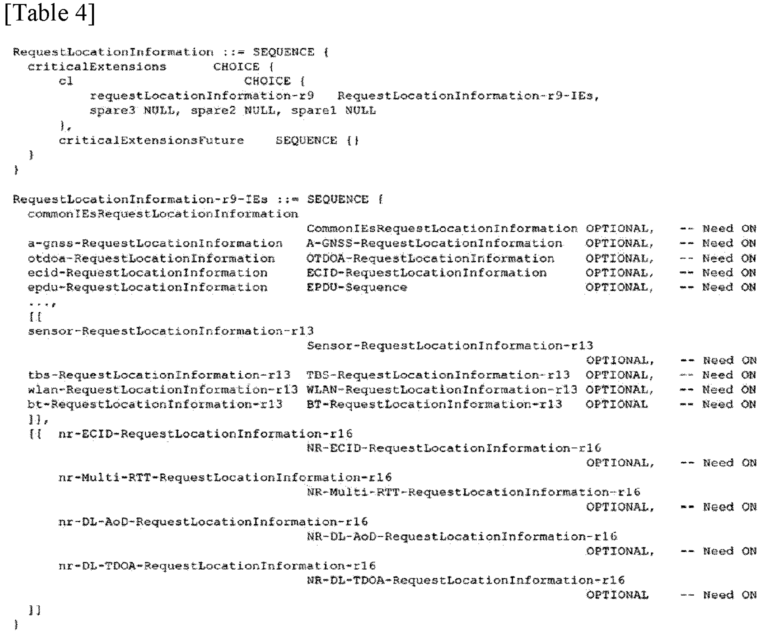

LPP location information provision (LPP provide location information) (UE → LMF, S530)
: This is a message available for the UE 500 to transfer, to the LMF 105, a measurement result and a location estimation result, which have been requested by the LMF 505. Information included in the message may be defined as in [Table 5] below.

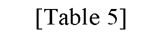

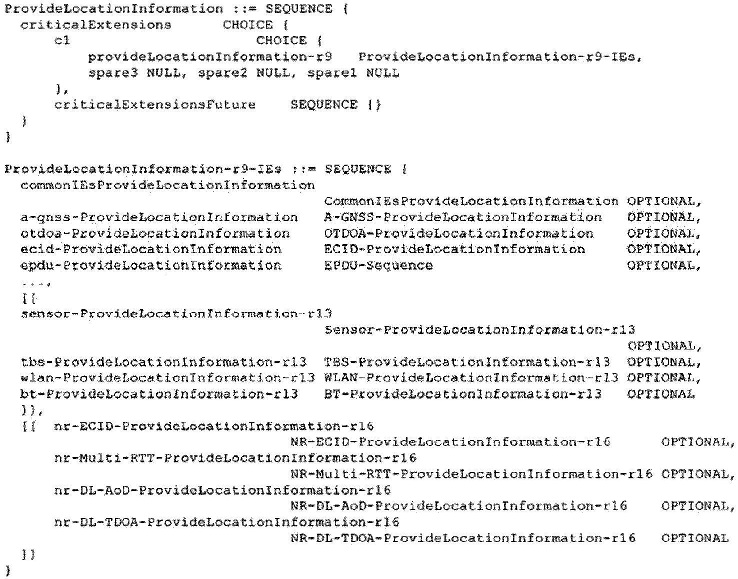

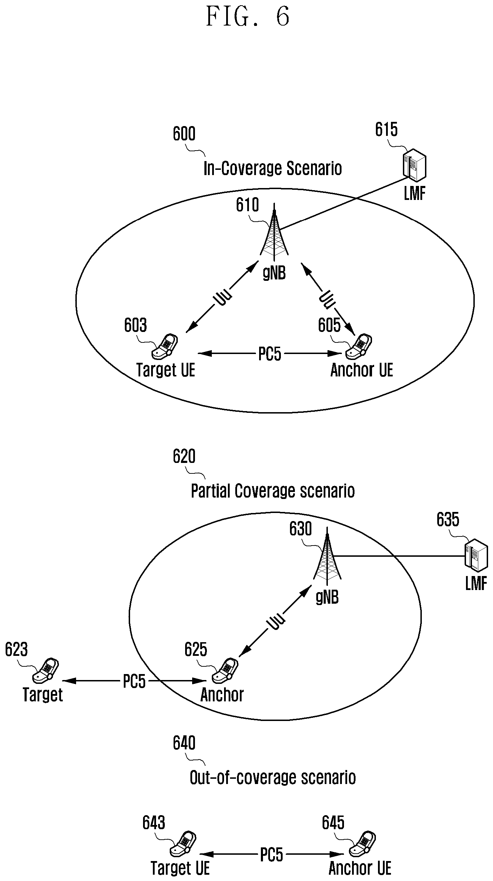

FIG. 6 is a diagram illustrating a sidelink positioning service scenario according to an embodiment of the disclosure.

Referring to FIG. 6, three SL-P scenarios may be defined as follows depending on whether a target/anchor UE is within a base station communication range (i.e., cell coverage of the base station).

### - In-coverage scenario 600:

This is a scenario in which, in SL-P, both a target UE 603 that is a location estimation target and an anchor UE 605 that assists in location estimation are within a communication range of a base station 610.

In this case, each of the target UE 603 and the anchor UE 605 is connected to a cell operated by the base station 610, and is able to perform communication via a Uu interface. In this case, an LMF 615 may exchange LPP messages with the target UE 603/anchor UE 605 for an SL-P operation, and participate in the SL-P operation. The LPP messages between the LMF 615 and the target UE 603/anchor UE 605 are transferred via the Uu interface between the target UE 603/anchor UE 605 and the base station 610.

For the SL-P operation, the target UE 603 may transmit and receive an SL-PRS to and from the anchor UE 605 via a PC5 interface. In addition, the target UE 603 and the anchor UE 605 may perform SL-PRS transmission and reception and exchange control messages for performing SL-P via the PC5 interface. Mode 1 or mode 2 may be used as a resource configuration method for sidelink (SL) transmission of the target UE 603/anchor UE 605.

When mode 1 is used, the base station may directly allocate SL transmission resources for the SL-P operation. In this case, the SL transmission resources may be allocated from licensed-band carriers used only for SL communication (licensed carriers dedicated to SL communication) or licensed-band carriers used for SL and uplink transmissions (licensed carriers sharing resources between SL and UL communication). The SL transmission resource configuration of the base station may include information on time (slot) and frequency (subchannel) domains, and if resource configuration is performed in a configured grant (CG) scheme, transmission resource periodicity information may also be included. When the resource configuration of mode 1 is used, the LMF may request the base station to configure SL transmission resources for performing the SL-P operation (e.g., SL-PRS and control message transmission and reception via the PC5 interface) of the target UE/anchor UE, and the base station may accordingly configure the SL transmission resources for the target UE/anchor UE in mode 1. In addition, the LMF may configure, for the target UE/anchor UE, operations required for performing SL-P, and the target UE/anchor UE may directly request, from the base station, SL transmission resources required for the corresponding operations. In this case, the base station may allocate the required SL transmission resources in response to the request of each UE.

When mode 2 is used, the base station may allocate a resource pool (sidelink resource pool) that may be used for SL transmission, and the target UE/anchor UE may directly select transmission resources required for the SL-P operation from the allocated resource pool. In this case, the LMF may transfer, to the base station, requirements (e.g., a frequency, a bandwidth, etc.) for the SL resource pool to be used for performing the SL-P operation. In response to a request of the LMF, the base station may configure a new SL resource pool for the target UE/anchor UE, or change a configuration of the previously configured SL resource pool.

In the resource configurations of mode 1 and mode 2, a shared resource pool or a dedicated resource pool may be configured as the SL resource pool for the SL-P operation. Here, using a shared SL resource pool indicates that a resource pool configured for the purpose of SL communication is used to transmit SL-P-related information, and using a dedicated SL resource pool indicates that a resource pool configured individually for an SL-P function is used to transmit SL-P-related information.

### - Partial-coverage scenario 620:

This is a scenario in which, in SL-P, a target UE 623 that is a location estimation target is outside a communication range of a base station 630, and an anchor UE 625 that assists in location estimation is within the communication range of the base station 630.

In this case, the anchor UE 625 is connected to a cell operated by the base station 630 and is able to communicate with the base station 630 via a Uu interface, and the target UE 623 is able to communicate with the anchor UE 625 via an SL PC5 interface. In this case, an LMF 615 may exchange LPP messages with the target UE 623/anchor UE 625 for an SL-P operation, and participate in the SL-P operation. The LPP message between the LMF 635 and the anchor UE 625 are transmitted and received via the Uu interface associated with the base station 630, and the LPP message between the LMF 635 and the target UE 623 may be exchanged by an SL relay operation of the anchor UE 625. For example, the LPP message transmitted by the target UE 623 to the LMF 635 may be transferred to the anchor UE 625 via the PC5 interface, and then transferred to a network via the Uu interface of the anchor UE 625.

For the SL-P operation, the target UE 623 may transmit and receive an SL-PRS to and from the anchor UE 625 via the PC5 interface. In addition, the target UE 623 and the anchor UE 625 may perform SL-PRS transmission and reception and exchange control messages for performing SL-P via the PC5 interface. Mode 1 or mode 2 may be used as a resource configuration method for sidelink transmission of the target UE 623/anchor UE 625.

When mode 1 is used, the base station may directly allocate SL transmission resources for the SL-P operation. In this case, the SL transmission resources may be allocated from licensed-band carriers used only for SL communication (licensed carriers dedicated to SL communication) or licensed-band carriers used for SL and uplink transmissions (licensed carriers sharing resources between SL and UL communication). The SL transmission resource configuration of the base station may include information on time (slot) and frequency (subchannel) domains, and if resource configuration is performed in a configured grant (CG) scheme, transmission resource periodicity information may also be included. When the resource configuration of mode 1 is used, the LMF may request the base station to configure SL transmission resources for performing the SL-P operation (e.g., SL-PRS and control message transmission and reception via the PC5 interface) of the target UE/anchor UE, and the base station may accordingly configure the SL transmission resources for the anchor UE in mode 1. In addition, the LMF may configure, for the target UE/anchor UE, operations required for performing SL-P, and the anchor UE may directly request, from the base station, SL transmission resources required for the corresponding operations. In this case, the base station may allocate the required SL transmission resources in response to the request of the anchor UE.

When mode 2 is used, the base station may allocate a resource pool (sidelink resource pool) that may be used for SL transmission, and the target UE/anchor UE may directly select transmission resources required for the SL-P operation. In this case, the LMF may transfer, to the base station, requirements (e.g., a frequency, a bandwidth, etc.) for the SL resource pool to be used for performing the SL-P operation. In response to a request of the LMF, the base station may configure a new SL resource pool for the target UE/anchor UE, or change a configuration of the previously configured SL resource pool.

In the resource configurations of mode 1 and mode 2, a shared resource pool or a dedicated resource pool may be configured as the SL resource pool for the SL-P operation. Here, using a shared SL resource pool indicates that a resource pool configured for the purpose of SL communication is used to transmit SL-P-related information, and using a dedicated SL resource pool indicates that a resource pool configured individually for an SL-P function is used to transmit SL-P-related information.

### - Out-of-coverage scenario 640:

This is a scenario in which, in SL-P, both a target UE 643 that is a location estimation target and an anchor UE 645 that assists in location estimation are outside a communication range of a base station.

In this case, both the target UE 643 and the anchor UE 645 are unable to communicate with the base station via a Uu interface, and the target UE 643 is able to communicate with the anchor UE 645 only via an SL PC5 interface. In addition, an LMF is unable to exchange LPP messages with the target UE 643/anchor UE 645 for an SL-P operation, and is thus unable to directly participate in the SL-P operation. For the SL-P operation, the target UE 643 may transmit and receive an SL-PRS to and from the anchor UE 645 via the PC5 interface. In addition, the target UE 643 and the anchor UE 645 may perform SL-PRS transmission and reception and exchange control messages for performing SL-P via the PC5 interface. Mode 2 may be used as a resource configuration method for sidelink transmission of the target UE 643/anchor UE 645.

When mode 2 is used, the base station may allocate, in advance, a resource pool (sidelink resource pool) that may be used for SL transmission (e.g., configuration is possible when within the communication range of the base station), and the target UE 643/anchor UE 645 may directly select transmission resources required for the SL-P operation by using the preconfigured resource pool. In this case, the LMF may transfer, to the base station, requirements (e.g., a frequency, a bandwidth, etc.) for the SL resource pool to be used for performing the SL-P operation. In response to a request of the LMF, the base station may configure a new SL resource pool for the target UE 643/anchor UE 645, or change a configuration of the previously configured SL resource pool. A shared resource pool or a dedicated resource pool may be configured as the SL resource pool for the SL-P operation. Here, using a shared SL resource pool indicates that a resource pool configured for the purpose of SL communication is used to transmit SL-P-related information, and using a dedicated SL resource pool indicates that a resource pool configured individually for an SL-P function is used to transmit SL-P-related information.

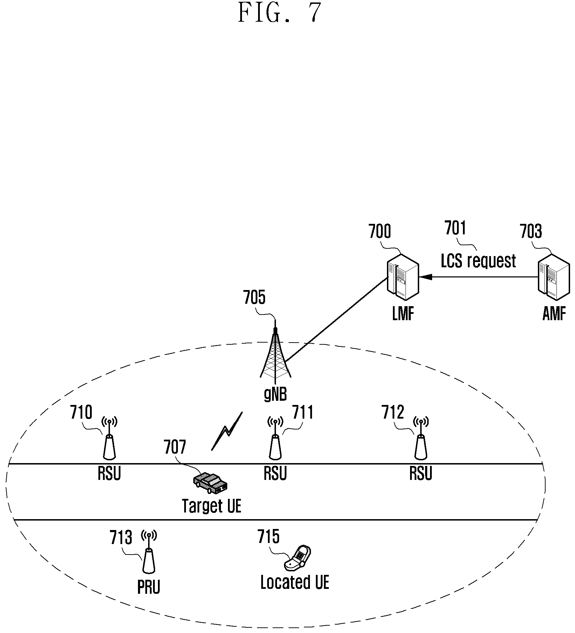

FIG. 7 is a diagram illustrating a scenario in which, when SL-P is performed, an LMF may be involved in a specific SL-P configuration and an anchor UE to be used for location estimation of a target UE according to an embodiment of the disclosure.

Referring to FIG. 7, an LMF 700 may receive a location estimation request 701 for a target UE 707 from an AMF 703. In addition, the LMF 700 may determine that an SL-P operation is required for location estimation of the target UE 707. When SL-P is required for location estimation of the target UE 707, there may be multiple anchor UEs 710, 711, 712, 713, and 715 that may be used for SL-P for location estimation of the target UE 707. Road side units (RSU) 710, 711, and 712, a positioning reference unit (PRU) 713, a located UE 715, etc. may be used as anchor UEs.

The LMF 700 may directly determine one or more anchor UEs to be used for SL-P for location estimation of the target UE 707, or may assist in anchor UE selection by determining candidate anchor UEs and then transmitting information on the candidate anchor UEs to the target UE 707. The LMF 700 may determine a location estimation technique (e.g., an RTT-based scheme, a TDOA scheme, an AoA/AoD scheme, etc.) to be used for SL-P for the target UE 707, and may configure target UE and anchor UE operations required for location estimation. Alternatively, the LMF 700 may provide the target UE 707 with multiple candidate location estimation techniques that may be used for SL-P and configurations of target UE and anchor UE operations required for each technique, thereby assisting the target UE to directly select the location estimation technique to be used for SL-P.

For the operation above, the target UE 707 may exchange messages (e.g., LTE positioning protocol (LPP) messages), which are related to location estimation operations, with the LMF 700 via a Uu interface associated with a serving gNB 705. For the described operations (determining whether the SL-P operation is required, determining the (candidate) anchor UEs, determining (candidate) location estimation techniques, and configuring a UE operation), the LMF 700 may acquire and store, in advance, information on the available anchor UEs 700, 711, 712, 713, and 715 (e.g., SL-P-related UE capability information, location information, SL operation information, etc.).

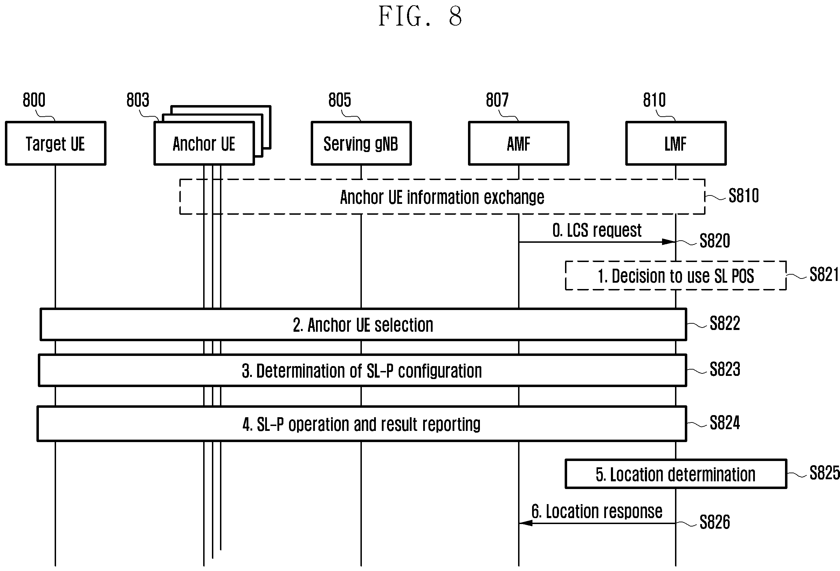

FIG. 8 is a flowchart of a procedure in which an LMF controls overall SL-P procedures according to an embodiment of the disclosure.

Referring to FIG. 8, in an SL-P procedure for estimating a location of a target UE 810, an LMF 810 may be involved in determining S821 whether an SL-P operation is required, determining S822 anchor UEs 803 to be used for SL-P, and configuring S823 the SL-P operation. Operations for each step are as follows. (However, the order of each step in the following embodiment is not fixed, and the order of each step may change depending on a situation.)
- Anchor UE information exchange S810: The LMF 810 may obtain, in advance, information on UEs (e.g., SL-P-related UE capability information, location information, SL operation information, etc.) which are operable as anchor UEs.
- 0. Location request in S820: The LMF 810 may receive, from an AMF 807, a location estimation request S820 for the target UE 800. In this case, a message for the location estimation request S820 may include positioning quality of service (QoS) requirements (accuracy and delay time) and positioning-related UE capability information of the target UE. In addition, the AMF 807 may explicitly request a ranging service or an SL-P service for the target UE 800 from the LMF 810 via the location estimation request message S720. For example, when the AMF 807 requests the ranging service from the LMF 810, relative distance and direction information for one or more UE pairs may be transmitted via the location estimation request message S820. In addition, as an example, when the AMF 807 requests the SL-P service from the LMF 810, a list of anchor UEs available for estimating the location of the target UE 800 and additional information on the respective anchor UEs (e.g., SL-P-related UE capability information, location information, SL operation information, etc.) may be included together in the location estimation request message S820.
- 1. Decide to use SL POS in S821: The LMF 810 may determine whether a ranging or SL-P operation is required, by considering location estimation requirements, location estimation-related capability information of the target UE 800, a previously identified location of the target UE, the presence or absence of an available anchor UE near the target UE, etc. However, if the AMF 807 has explicitly requested a ranging or SL-P operation via the location estimation request message S820 as described above, this step may be omitted.
- 2. Select anchor UEs in S821: If it is determined, in step S820, that an SL-P operation is required for location estimation of the target UE 800, the LMF 810 may select the anchor UE 803 to be actual used for SL-P from among multiple anchor UEs available for SL-P for the target UE. Alternatively, the LMF 810 may provide the target UE 800 with information on the multiple available candidate anchor UEs, thereby assisting the target UE to directly select the anchor UE to be used for SL-P.
- 3. Determine configuration for SL-P in S823: The LMF 810 may determine a location estimation technique (e.g., an RTT-based scheme, a TDOA scheme, an AoA/AoD scheme, etc.) to be used for SL-P for the target UE 800, and may determine target/anchor UE operation configurations required for location estimation. Alternatively, the LMF 810 may provide the target UE 800 with multiple candidate location estimation techniques that may be used for SL-P and target/anchor UE operation configurations required for each technique, thereby assisting the target UE to directly select the location estimation technique to be used for SL-P.
- 4. SL-P operation and result report in S824: The target UE 810 and the anchor UE 803 may perform operations required for SL-P (such as SL-PRS transmission and reception, RTT measurement, TDOA measurement, AoA/AoD measurement, etc.) according to the operation configurations determined in step 3 S823, and report results thereof to the LMF 810.
- 5. Location determination in S825: The LMF 810 may obtain a location estimation result requested by the AMF 807 in step 0 S810, based on the results reported from the target UE 800 and anchor UE 803 in step 4 S824.
- 6. Location response in S826: The LMF 810 may transfer the result of performing positioning to the AMF 807.

As shown in FIG. 8, in order for the LMF to be involved in determining whether an SL-P operation is required, determining anchor UEs to be used for SL-P, and configuring the SL-P operation, information on UEs operable as anchor UEs may need to be obtained. In this case, three examples below may be provided as methods for the LMF to obtain information on available anchor UEs.

Option 1. Pre-configuration by network implementation: An operation, administration, and maintenance (OAM) system operated by a communication service provider may provide information on anchor UEs, which the service provider has identified, to the LMF in advance.

Option 2. Anchor UE information registration using a mobile terminated location request (MT-LR), a mobile originated location request (MO-LR), and a network induced location request (NI-LR)
* 2-1. MT-LR-based anchor UE information registration: A method in which any entity having knowledge of information on available anchor UEs registers the information on the anchor UEs in the LMF by using an MT-LR procedure.
* 2-2. NI-LR-based anchor UE information registration: A method in which the AMF registers information on available anchor UEs in the LMF by using an NI-LR procedure.
* 2-3. MO-LR-based anchor UE information registration: A method in which UEs capable of operating as anchor UEs register information on the anchor UEs in the LMF by using an MO-LR procedure.

Option 3. Direct obtaining via an LPP session while performing SL-P: A method in which the LMF obtains, via LPP sessions with candidate anchor UEs, additional information on corresponding anchor UEs while performing the SL-P procedure for location estimation of the target UE.

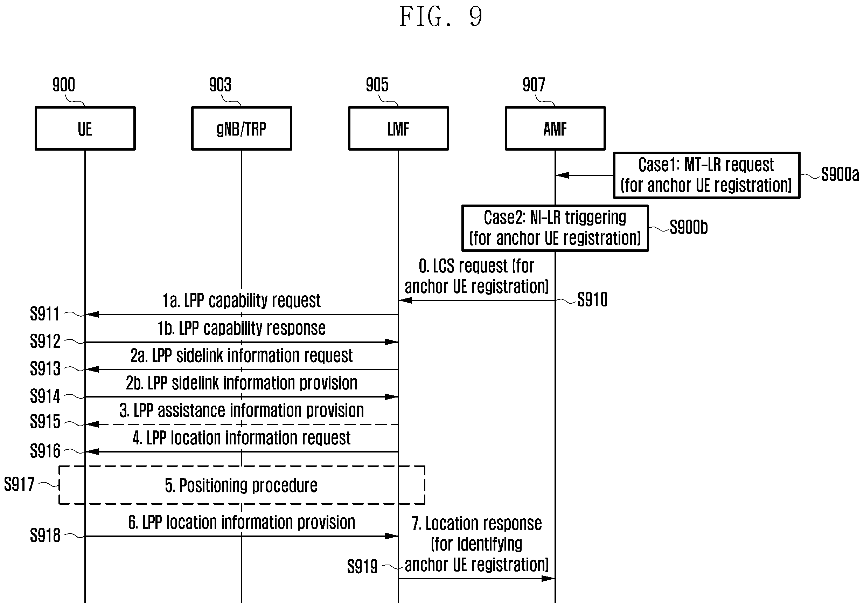

FIG. 9 is a flowchart of an anchor UE information registration procedure using mobile terminated location request (MT-LR) and network induced location request (NI-LR) procedures according to an embodiment of the disclosure.

More specifically, as a method by which an LMF is able to acquire information on available anchor UEs, FIG. 9 illustrates, based on option 2-1 described above, a case (case 1) where an entity having knowledge of available anchor UEs triggers an MT-LR procedure to provide information on the available anchor UEs to an LMN, and illustrates, based on option 2-2 described above, a case (case 2) where an AMF triggers an NI-LR procedure to provide information on the available anchor UEs to an LMF.

Referring to FIG. 9, as in case 1 S900a, any entity having identified the presence of an available anchor UE 900 may transmit an MT-LR message to an AMF 907 so that an MT-LR procedure for registering information of the specific anchor UE 900 in an LMF 905 may be initiated. Alternatively, as in case 2 S900b, when the AMF 907 has identified the presence of the available anchor UE 900, the AMF 907 may initiate an NI-LR procedure by itself to register information of the specific anchor UE 900 in the LMF 905. Specific procedures of registering information on the specific anchor UE 900 in the LMF 905 by the MT-LR and NI-LR procedures initiated as above are as follows. (However, the order of each step in the following embodiment is not fixed, and the order of each step may change depending on a situation.)
- 0. Location request in S910: When the MT-LR or NI-LR procedure for registering the specific anchor UE is initiated, the AMF 907 may transmit a location request S910 for the UE to the LMF 905.
   * In this case, it may be explicitly indicated that the request is for SL-P anchor UE registration.
   * When the MT-LR or NI-LR procedure is initiated for anchor UE registration, positioning QoS (e.g., accuracy and latency), etc., included in the existing location request message S910 may be omitted (excluded).
   * The location request message S910 may include information on types (e.g., a positioning reference unit (PRU), a road side unit (RSU), etc.) and roles (e.g., a reference UE, an assistant UE, and a located UE) supportable by the anchor UE 900. For case 1 S900a, the information may be included in the MT-LR message that the any entity has transferred to the AMF 907.
   * In addition, when there is a previously obtained positioning capability for the UE 900, the positioning capability may be transferred together with the LCS request. In this case, steps 1a/1b S911 and S912 can be omitted.
- 1a. LPP RequestCapabilities in S911: The LMF 905 may transmit an LPP RequestCapabilities message to obtain a location estimation-related UE capability of the anchor UE 900.
   * In this case, a separate indicator may be included in the LPP RequestCapabilities message to request only specific capability information related to a role of the anchor UE without receiving the entire capability information.
- 1b. LPP ResponseCapabilities in S912: The UE 900 may report UE capability information, which has been requested by the LMF 905, to the LMF 905 via an LPP ResponseCapabilities message S912.
   * The following information related to sidelink positioning may be newly added to the LPP ResponseCapabilities message S912.
      ** SL-PRS Tx/Rx support: Whether SL-PRS transmission and reception are supported
      ** Supported SL positioning method (e.g., RTT-type solution using SL, SL-AoA, SL-TDOA, or SL-AoD) as anchor UE: Supportable SL-P location estimation technique.
      ** Available mode of SL positioning (i.e., standalone, UE-based, or UE-assisted) associated with each SL positioning method: SL-P mode supportable for each SL-P location estimation technique. Alternatively, an SL-P mode supportable regardless of a location estimation technique.
      ** Available role of SL positioning (e.g., target UE, reference UE, assistant UE, or located UE) associated with each SL positioning method: Anchor UE role supportable for each SL-P location estimation technique. Alternatively, an anchor UE role supportable regardless of a location estimation technique.
      ** Known location support: Whether previously obtained location information is reportable.
      ** Mobility type (e.g., fixed or mobile): Mobility of the UE regarding whether the UE is mobile or fixed. Alternatively, whether the mobility is reportable.
      ** Supported SL-P discovery (e.g., model A or model B): SL discovery model supported for SL-P.
      ** Anchor UE type (e.g., PRU, LSU, ...): Device type of the anchor UE.
- 2a. LPP RequestSidelinkInformation in S913: The LMF 905 may transmit a newly defined LPP RequestSidelinkInformation message to obtain SL-P operation-related information of the anchor UE 900.
   * In this case, a separate indicator may be included in the LPP RequestSidelinkInformation message to request only information required by the LMF 905 without receiving all the SL-P operation-related information.
- 2b. LPP ProvideSidelinkInformation in S914: The UE 900 may report the SL-P operation-related information requested by the LMF 905 in step 2a S813 to the LMF 905 via a newly defined LPP ProvideSidelinkInformation message S914. In this case, the message may include the following information.
   ** Serving cell ID (e.g., ECGI): Serving gNB 903 ID of the UE
   ** SL frequency/BWP: SL operation frequency band and SL BWP configuration information of the UE.
   ** SL Tx/Rx resource pool (shared or dedicated): SL transmission/reception resource pool information available for performing an SL-P operation. A resource pool shared with an existing SL operation or a resource pool configured separately for an SL-P operation.
   **SRC L2 ID, DST L2 ID (for SL-P unicast/groupcast or broadcast): SRC L2 ID and DST L2 ID used by the UE 900 for unicast/groupcast or broadcast during an SL-P operation.
   ** (For discovery) Announce msg Tx interval: Announcement msg transmission time interval information of the UE 900 when supporting a model A discovery scheme.
      * If the SL-P operation-related information is changed, the UE 900 may report the change via the LPP ProvideSidelinkInformation message S914 even without the request by the LMF 905.
      * The LMF 905 and the UE 900 may reuse the existing messages S911 and S912 instead of transmitting the newly defined messages S913 and S914 to exchange the SL-P operation-related information. In this case, the LPP RequestCapabilities message S911 may include a separate indicator for requesting the SL-P operation-related information, and the LPP ResponseCapabilities message S912 may include the SL-P operation-related information. In this case, unnecessary signaling load and delay time may be reduced by omitting steps 2a/2b S913 and S914.
- 3. LPP ProvideAssistanceData: If the LMF 905 needs a positioning operation to obtain the location of the UE 900, the LMF 905 may determine a method (e.g., A-GNSS, E-CID, DL-TDOA, ...) and a mode (i.e., standalone, UE-based, or UE-assisted) to be used for positioning, and may perform the positioning operation. To this end, the LMF 905 may transfer assistance information required for the positioning operation to the UE via an LPP ProvideAssistanceData message S915.
   * When the LMF 905 has identified, via the operations of steps 0 and 1 S910 to S912, that the UE 900 is able to report a known location (i.e., when the UE supports a located UE role), no additional positioning operation is required, and therefore the LPP ProvideAssistanceData transmission operation S915 may be omitted.
- 4. LPP RequestLocationInformation in S916: The LMF 905 may transmit, to the UE 900, an LPP RequestLocationInformation message S916 to obtain location information of the UE 900.
   * If the UE 900 is able to report the known location immediately, the LMF 905 may include, in LPP RequestLocationInformation, an indicator for requesting the known location. In addition, a field for indicating to report information, such as a method/time in which the known location has been obtained, may also be included in LPP RequestLocationInformation. In addition, information indicating to perform reporting only when the known location satisfies a specific condition may be included in LPP RequestLocationInformation. For example, reporting conditions, such as the accuracy, integrity, type, and obtaining time point of the known location, may be included in LPP RequestLocationInformation.
   * When an additional positioning operation is required to obtain the UE location, the LMF 905 may determine a method (e.g., A-GNSS, E-CID, DL-TDOA, ...) and a mode (i.e., standalone, UE-based, or UE-assisted) to be used for positioning, and may include a detailed configuration for the positioning operation in LPP RequestLocationInformation S916.
- 5. Positioning procedure in S917: The UE 900 may perform the required positioning operation according to the indication of the LMF 905, which is received in step 4 S916. In this case, if the LMF 905 has indicated to report only the known location, this step may be omitted.
- 6. LPP ProvideLocationInformation in S918: The UE 900 may report the location information requested by the LMF 905 in step 4 S916 to the LMF 905 via an LPP ProvideLocationInformation message S918.
   * If indicated to report the known location, the UE 900 may report the known location while explicitly indicating that the location information is the known location. To this end, a new field for only the known location may be defined. In addition, the following information, such as the method/time in which the known location has been obtained, may be also included in the LPP ProvideLocationInformation message. If the UE is unable to transfer the known location, the UE may explicitly report a failure in providing of the known location with a specific reason via LPP ProvideLocationInformation.
      ** Known location: Location information that the UE 900 has previously identified.
      ** known location accuracy (uncertainty)
      ** known location integrity
      ** Known location acquisition time: Point in time when the known location has been obtained.
      ** Known location type (e.g., pre-configuration, previous estimation with the method used for the estimation, ...): Known location type. For example, a location configured at installation, a previously estimated location via positioning (in this case, information on the previously used location estimation technique may additionally be reported), etc.
      ** Known location failure cause (e.g., no data, invalid, ...): If the known location cannot be reported, an indicator for reporting a specific cause (e.g., when there is no data to be reported, or existing data is no longer valid due to a change in location, etc.) may be included.
   * If the known location information is changed, the UE 900 may report the change via the LPP ProvideLocationInformation message S918 even without the request by the LMF 905.
   * When an estimated location or a measurement result is obtained via the positioning procedure in step 5 S917, the UE 900 may report the same to the LMF 905 by using parameters in the existing LPP ProvideLocationInformation message S918.
- 7. Location response in S919: The LMF 905 may complete the registration procedure for the specific anchor UE, based on the information received from the UE 900 in step 6 S918. Then, the LMF 905 may notify the AMF 907 that the anchor UE registration procedure requested in step 0 S910 has been completed.

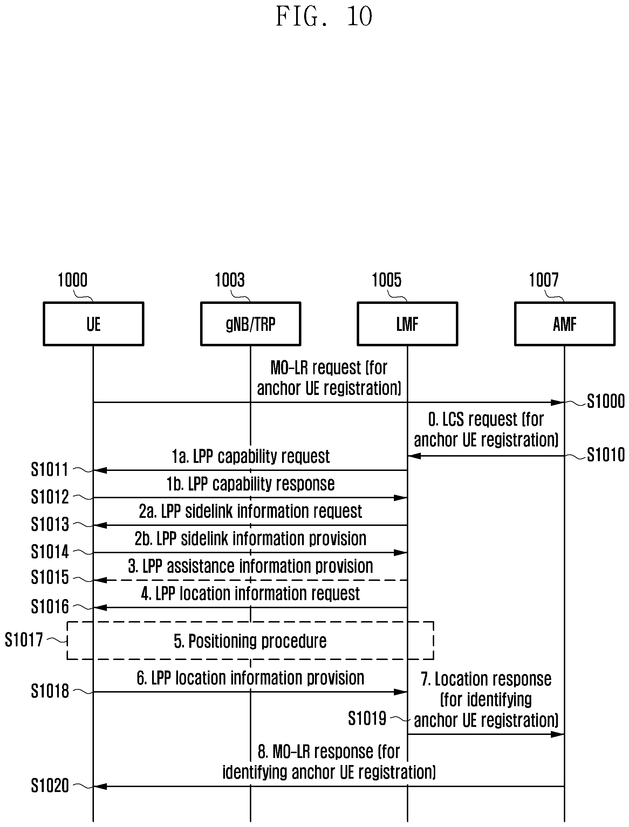

FIG. 10 is a flowchart of an anchor UE information registration procedure using a mobile originated location request (MO-LR) procedure according to an embodiment of the disclosure. More specifically, as a method by which an LMF is able to acquire information on available anchor UEs, FIG. 10 illustrates, based on option 2-3 described above, a case where each anchor UE triggers an MO-LR procedure on its own to provide information on the available anchor UEs to the LMF.

Referring to FIG. 10, a UE 1000 which can be used as an anchor UE may initiate an MO-LR procedure by transmitting an MO-LR message 1008 to an AMF 1007, so that the UE 1000 is registered as an anchor UE in an LMF 1005.
* In this case, an MO-LR request message S1000 may explicitly indicate that the request is for anchor UE registration.
* The anchor UE 1000 may include, in the MO-LR request message S1000, additional information required for anchor UE registration. To this end, one or more LPP messages may be included together in the MO-LR request message S 1000, and the following information may be newly added to the LPP messages for anchor UE registration.

(In LPP ProvideCapabilities)
   ** SL-PRS Tx/Rx support: Whether SL-PRS transmission and reception are supported
   ** Supported SL positioning method (e.g., RTT-type solution using SL, SL-AoA, SL-TDOA, or SL-AoD) as anchor UE: Supportable SL-P location estimation technique.
   ** Available mode of SL positioning (i.e., standalone, UE-based, or UE-assisted) associated with each SL positioning method: SL-P mode supportable for each SL-P location estimation technique. Alternatively, an SL-P mode supportable regardless of a location estimation technique.
   ** Available role of SL positioning (e.g., target UE, reference UE, assistant UE, or located UE) associated with each SL positioning method: Anchor UE role supportable for each SL-P location estimation technique. Alternatively, an anchor UE role supportable regardless of a location estimation technique.
   ** Known location support: Whether previously obtained location information is reportable.
   ** Mobility type (e.g., fixed or mobile): Mobility of the UE, such as whether the UE is mobile or fixed, or whether the mobility is reportable.
   ** Supported SL-P discovery (e.g., model A or model B): SL discovery model supported for SL-P.
   ** Anchor UE type (e.g., PRU, LSU, ...): Device type of the anchor UE.
(In LPP ProvideLocationInformation)
   ** Known location: Location information that the UE 100 has previously identified.
   ** Known location accuracy (uncertainty)
   ** Known location integrity
   ** Known location acquisition time: Point in time when the known location has been obtained.
   ** Known location type (e.g., pre-configuration, previous estimation with the method used for the estimation, ...): Known location type. For example, a location configured at installation, a previously estimated location via positioning (in this case, information on the previously used location estimation technique may additionally be reported), etc.
(In newly defined LPP ProvideSidelinkInformation message)
   ** Serving cell ID (e.g., ECGI): Serving gNB 1003 ID of the UE
   ** SL frequency/BWP: SL operation frequency band and SL bandwidth part (BWP) configuration information of the UE.
   ** SL Tx/Rx resource pool (shared or dedicated): SL transmission/reception resource pool information available for performing an SL-P operation. A resource pool shared with an existing SL operation or a resource pool configured separately for an SL-P operation.
   **SRC L2 ID, DST L2 ID (for SL-P unicast/groupcast or broadcast): SRC L2 ID and DST L2 ID used by the UE 1000 for unicast/groupcast or broadcast during an SL-P operation.
   ** (For discovery) Announce msg Tx interval: Announcement msg transmission time interval information of the UE 1000 when supporting a model A discovery scheme.
      * A specific procedure of registering information on the specific anchor UE 1000 in the LMF 1005 by the MO-LR procedure is as follows. (However, the order of each step in the following embodiment is not fixed, and the order of each step may change depending on a situation)
         - 0. Location request in S1010: When the MO-LR procedure for anchor UE registration is initiated, the AMF 1007 may transmit a location request S1010 for the UE to the LMF 1005.
      * In this case, the location request S1010 may explicitly indicate that the request is for SL-P anchor UE registration.
      * When the MO-LR procedure is initiated for anchor UE registration, positioning QoS (e.g., accuracy and latency), etc., included in the existing location request message S1010 may be omitted (excluded) from the message.
      * The location request message S1010 may include information on types (e.g., a PRU, an RSU, etc.) and roles (e.g., a reference UE, an assistant UE, and a located UE) supportable by the anchor UE 1000.
      * In addition, if the MO-LR message S1000 includes LPP messages to transfer additional information on the anchor UE 1000, the LPP messages may be transferred together to the LMF 1005.
   ** If an LPP ProvideCapabilities message is included, steps 1a/1b S1011 and S1012 below can be omitted.
   ** If an LPP ProvideSidelinkInformation message is included, steps 2a/1b S1013 and S1014 below can be omitted.
   ** If an LPP ProvideLocationInforamtion message is included, steps 3 to 6 S1015 to S1018 below can be omitted.
      - 1a. LPP RequestCapabilities in S1011: The LMF 1005 may transmit an LPP RequestCapabilities message to obtain a location estimation-related UE capability of the anchor UE 1000.
         * In this case, a separate indicator may be included in the LPP RequestCapabilities message to request only specific capability information related to a role of the anchor UE without receiving the entire capability information.
      - 1b. LPP ResponseCapabilities in S1012: The UE 1000 may report requested UE capability information to the LMF 1005 via an LPP ResponseCapabilities message S1012.
         * The following information related to sidelink positioning may be newly added to the LPP ResponseCapabilities message S1012.
   ** SL-PRS Tx/Rx support: Whether SL-PRS transmission and reception are supported
   ** Supported SL positioning method (e.g., RTT-type solution using SL, SL-AoA, SL-TDOA, or SL-AoD) as anchor UE: Supportable SL-P location estimation technique.
   ** Available mode of SL positioning (i.e., standalone, UE-based, or UE-assisted) associated with each SL positioning method: SL-P mode supportable for each SL-P location estimation technique. Alternatively, an SL-P mode supportable regardless of a location estimation technique.
   ** Available role of SL positioning (e.g., target UE, reference UE, assistant UE, or located UE) associated with each SL positioning method: Anchor UE role supportable for each SL-P location estimation technique. Alternatively, an anchor UE role supportable regardless of a location estimation technique.
   ** Known location support: Whether previously obtained location information is reportable.
   ** Mobility type (e.g., fixed or mobile): Mobility of the UE, such as whether the UE is mobile or fixed, or whether the mobility is reportable.
   ** Supported SL-P discovery (e.g., model A or model B): SL discovery model supported for SL-P.
   ** Anchor UE type (e.g., PRU, LSU, ...): Device type of the anchor UE.
      - 2a. LPP RequestSidelinkInformation in S1013: The LMF 1005 may transmit a newly defined LPP RequestSidelinkInformation message to obtain SL-P operation-related information of the anchor UE 1000.
         * In this case, a separate indicator may be included in the LPP RequestSidelinkInformation message to request only information required by the LMF 1005 without receiving all the SL-P operation-related information.
      - 2b. LPP ProvideSidelinkInformation in S1014: The UE 1000 may report the SL-P operation-related information requested by the LMF 1005 in step 2a S113 to the LMF 1005 via a newly defined LPP ProvideSidelinkInformation message S1014. In this case, the message may include the following information.
   ** Serving cell ID (e.g., ECGI): Serving gNB 1003 ID of the UE
   ** SL frequency/BWP: SL operation frequency band and SL BWP configuration information of the UE.
   ** SL Tx/Rx resource pool (shared or dedicated): SL transmission/reception resource pool information available for performing an SL-P operation. A resource pool shared with an existing SL operation or a resource pool configured separately for an SL-P operation.
   **SRC L2 ID, DST L2 ID (for SL-P unicast/groupcast or broadcast): SRC L2 ID and DST L2 ID used by the UE 100 for unicast/groupcast or broadcast during an SL-P operation.
   ** (For discovery) Announce msg Tx interval: Announcement msg transmission time interval information of the UE 100 when supporting a model A discovery scheme.
      * If the SL-P operation-related information is changed, the UE 1000 may report the change via the LPP ProvideSidelinkInformation message S1014 even without the request by the LMF 1005.
      * The LMF 1005 and the UE 1000 may reuse the existing messages S1011 and S1012 instead of transmitting the newly defined messages S1013 and S1014 to exchange the SL-P operation-related information. In this case, the LPP RequestCapabilities message S1011 may include a separate indicator for requesting the SL-P operation-related information, and the LPP ResponseCapabilities message S1012 may include the SL-P operation-related information. In this case, unnecessary signaling load and delay time may be reduced by omitting steps 2a/2b S1013 and S1014.
         - 3. LPP ProvideAssistanceData: If a positioning operation is required to obtain the location of the UE 1000, the LMF 1005 may determine a method (e.g., A-GNSS, E-CID, DL-TDOA, ...) and a mode (i.e., standalone, UE-based, or UE-assisted) to be used for positioning, and may perform the positioning operation. To this end, the LMF 1005 may transfer assistance information required for the positioning operation to the UE via an LPP ProvideAssistanceData message S1015.
      * When the LMF 1005 has identified, via the operations of steps 0 to 1 S1010 to S1012, that the UE 1000 is able to report a known location (i.e., when the UE supports a located UE role), no additional positioning operation is required, and therefore the LPP ProvideAssistanceData transmission operation S1015 may be omitted.
         - 4. LPP RequestLocationInformation in S1016: The LMF 1005 may transmit, to the UE 1000, an LPP RequestLocationInformation message S1016 to obtain location information of the UE 1000.
      * If the UE 1000 is able to report the known location immediately, the LMF 1005 may include, in the LPP RequestLocationInformation message, an indicator for requesting the known location. In addition, a field for indicating to report information, such as a method/time in which the known location has been obtained, may also be included in the LPP RequestLocationInformation message. In addition, reporting of the known location only when a specific condition is satisfied may be indicated in the LPP RequestLocationInformation message. For example, reporting conditions, such as the accuracy, integrity, type, and obtained time point of the known location, may be included in the LPP RequestLocationInformation message.
      * When an additional positioning operation is required to obtain the UE location, the LMF 1005 may determine a method (e.g., A-GNSS, E-CID, DL-TDOA, ...) and a mode (i.e., standalone, UE-based, or UE-assisted) to be used for positioning, and may include a detailed configuration for the positioning operation in LPP RequestLocationInformation S1016.
         - 5. Positioning procedure in S1017: The UE 1000 may perform the required positioning operation according to the indication of the LMF 1005, which is received in step 4 S1016. However, if the LMF 1005 has indicated to report only the known location, this step may be omitted.
         - 6. LPP ProvideLocationInformation in S1018: The UE 1000 may report the location information requested by the LMF 1005 in step 4 S1016 to the LMF 1005 via an LPP ProvideLocationInformation message S1018.
      * If indicated to report the known location, the UE 1000 may report the known location while explicitly indicating that the location information is the known location. To this end, a new field for only the known location may be defined. In addition, the following information, such as the method/time in which the known location has been obtained, may be also included in the report. If the UE is unable to transfer the known location, the UE may explicitly report a failure in providing of the known location with a specific reason via LPP ProvideLocationInformation.
   ** Known location: Location information that the UE 1000 has previously identified.
   ** Known location accuracy (uncertainty)
   ** Known location integrity
   ** Known location acquisition time: Point in time when the known location has been obtained.
   ** Known location type (e.g., pre-configuration, previous estimation with the method used for the estimation, ...): Known location type. For example, a location configured at installation, a previously estimated location via positioning (in this case, information on the previously used location estimation technique may additionally be reported), etc.
   ** Known location failure cause (e.g., no data, invalid, ...): If the known location cannot be reported, an indicator for reporting a specific cause (e.g., when there is no data to be reported, or existing data is no longer valid due to a change in location, etc.) may be included.
      * If the known location information is changed, the UE 1000 may report the change to the LMF 1005 via the LPP ProvideLocationInformation message S1018 even without the request by the LMF 1005.
      * When an estimated location or a measurement result is obtained via the positioning procedure in step 5 S1017, the UE 1000 may report the same to the LMF 1005 by using parameters in the existing LPP ProvideLocationInformation message S1018.
         - 7. Location response in S1019: The LMF 1005 may complete the registration procedure for the specific anchor UE, based on the information received from the UE 1000 in step 6 S1018. Then, the LMF 1005 may notify the AMF 1007 that the anchor UE registration procedure requested in step 0 S1010 has been completed.
         - 8. MO-LR response in S1020: The AMF 1007 may notify the UE 1000 that the anchor UE registration procedure has been completed, the UE 1000 having initiated the anchor UE registration procedure via the MO-LR request S1000. To this end, the MO-LR response message S1020 may include an indicator indicating the completion of the anchor UE registration procedure.

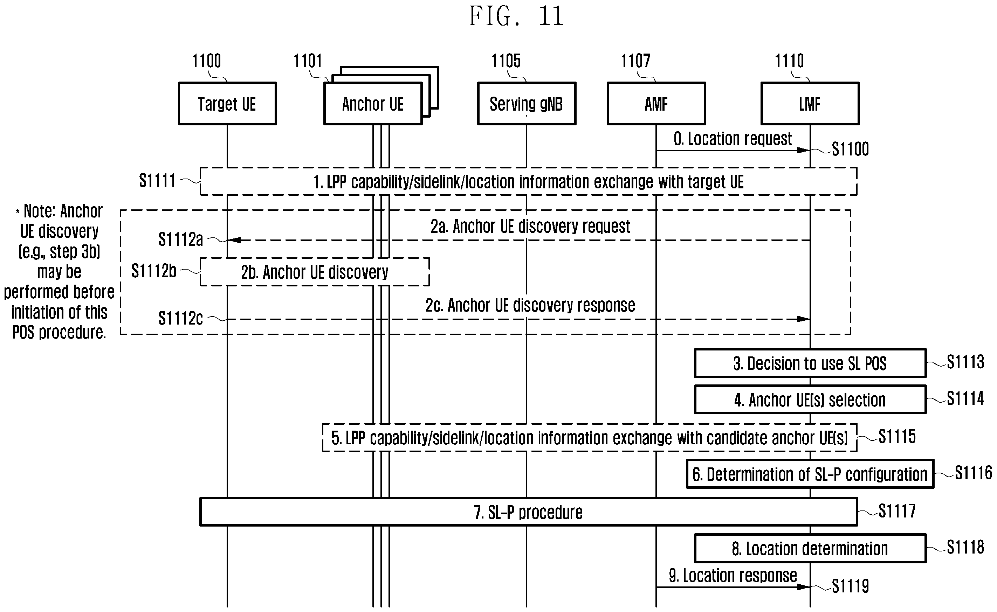

FIG. 11 is a flowchart of a procedure in which an LMF acquires information required for SL-P configuration via LPP signaling with anchor UEs during an SL-P service procedure control according to an embodiment of the disclosure.

Referring to FIG. 11, an AMF 1107 may request an LMF 1110 to estimate a location of a target UE 1100, and the LMF 1110 may perform the requested location estimation and then respond with a result thereof to the AMF 1107. In this case, the LMF 1110 may indicate anchor UE discovery to the target UE 1100, and based on a reported result thereof, anchor UEs to be used for an SL-P operation may be determined. Then, the LMF 1110 may additionally obtain capability/sidelink/know location information, etc. for selected anchor UEs via additional LPP signaling with the anchor UEs. In addition, based on this, the LMF 1110 may determine a specific SL-P operation configuration. A specific procedure for each step is as follows. (However, the order of each step in the following embodiment is not fixed, and the order of each step may change depending on a situation)
- 0. Location request in S1110: The AMF 1107 may initiate a positioning service by transmitting a location request message S1110 for the target UE 1110 to the LMF 1110. The location request message S1110 may include information on QoS requirements (e.g., accuracy and latency) for the positioning service.
   * If there exist positioning capabilities of the target UE 1100/anchor UEs 1101, which have already been obtained, the AMF 1107 may transfer the same to the LMF 1110 via the location request message S1110.
      1. LPP capability/sidelink/location information transfer with target UE in S1111: The LMF 1110 may exchange capability, sidelinkInformation, and known location information required for performing SL-P, which are included in the location request message S1110 in step 0, with the target UE 1100 as needed via LPP messages. To this end, LPP message exchanges corresponding to steps S911, S912, S913, S914, S916, and S918 described in the FIG. 9 may be performed.
   * If the AMF 1107 has provided the positioning capability of the target UE 1100 in step 0 S1110, step 1 S1111 may be omitted.
- 2. Anchor UE discovery in S1112a/S1112b/S1112c: The LMF 1110 may request an anchor UE discovery operation from the target UE 1100. The target UE 1100 may perform the discovery operation in response to the request of the LMF 1110, determine candidate anchor UEs accordingly, and then report the same to the LMF 1110.
- 2a. Anchor UE discovery request in S1112a: The LMF 1110 may request the anchor UE discovery operation from the target UE 1100. In order to perform the discovery operation, the following information may be included in the anchor UE discovery request.
   * SL frequency/BWP and Tx/Rx resource pool: This can be omitted if already provided via system information or pre-configuration.
      ** Reference signal strength indicator (RSSI)/reference signal received power (RSRP)/reference signal received quality (RSRQ)/signal to interference plus noise ratio (SINR) threshold: The LMF 1110 may indicate the target UE 1100 not to select and report a candidate anchor UE in which a signal strength measured during the discovery is equal to or less than a specific threshold.
      ** RSSI/RSRP/RSRQ/SINR report configuration: If the LMF 1110 needs information related to the signal strength between the candidate anchor UEs and the target UE 1100 to determine the SL-P configurations, the target UE 1100 may be indicated to measure corresponding values during the discovery and then report the same later.
      ** Distance threshold: The LMF 1110 may indicate the target UE 1100 not to report a candidate anchor UE in which a distance from the anchor UE obtained during the discovery is equal to or greater than a specific threshold.
      ** Capability condition: The LMF 1110 may indicate the target UE 1100 not to report an anchor UE that does not support a specific location estimation technique/mode, etc., based on positioning capability information of the candidate anchor UE additionally obtained during the discovery.
      ** Capability report configuration: When the LMF 1110 is to identify the capabilities of the anchor UEs during the discovery S112b, instead of obtaining the capabilities of the candidate anchor UEs via LPP message exchanges in step 5 S1115 below, the LMF 1110 may indicate the target UE 1100 to report the capabilities of the candidate anchor UEs.
      ** Known location condition: If the known location of the anchor UE additionally obtained during the discovery differs by a certain level or higher from the known location information provided by the LMF 1110, a certain amount of time has elapsed from a location collected time, information of the known location is no longer valid, or the accuracy/integrity of the known location is a certain level or lower, the LMF 1110 may indicate the target UE 1100 not to report the corresponding candidate anchor UE.
      ** Known location report configuration: When the LMF 1110 is to additionally identify known locations of the candidate anchor UEs during the discovery, instead of obtaining the known locations of the candidate anchor UEs via LPP message exchanges in step 5 S1115 below, the LMF 1110 may indicate the target UE 1100 to report the known locations of the (candidate) anchor UEs. In this case, it may be indicated to report information, such as the accuracy, integrity, obtained time, and type of the known locations, together with the known locations of the (candidate) anchor UEs.
      ** Solicitation msg periodicity/duration/number of Tx (only for model B): When SL discovery mode B is used for discovery for SL-P, the LMF 1110 may configure a periodicity, a transmission duration, the number of transmissions, etc. which the target UE 1100 is to use when transmitting a solicitation message.
      ** Latency requirement on the discovery (e.g., maximum allowable response time for discovery result): The LMF 1110 may configure requirements on latency between a time when the target UE 1100 performs the discovery operation to a time when the target UE 1100 reports a result thereof.
      ** Number of required anchor UE(s): The LMF 1110 may configure the number of anchor UEs required for performing SL-P for location estimation of the target UE 1100. After performing the discovery, the target UE 1100 may select and report as many candidate anchor UEs as the number of anchor UEs, which is configured by the LMF 1110, or more.
- 2b. Anchor UE discovery in S1112b: The target UE 1100 and the anchor UE 1102 may perform the discovery operation. In case of a model A scheme, the target UE 1100 may receive announcement messages transmitted by the anchor UEs 1101. In case of a model B scheme, the anchor UEs 1101 may receive a solicitation message transmitted by the target UE 1100, and then respond to the same.
   * If there is a result of discovery that the target UE 1100 has already performed before the location estimation procedure, this step may be omitted.
- 2c. Anchor UE discovery response in S1112c: After performing the discovery operation, the target UE 1100 may select candidate anchor UEs that satisfy the conditions configured by the LMF 1110 from among successfully discovered anchor UEs, and may report IDs (e.g., SUPIs) of the corresponding UEs to the LMF 1110.
   * If the LMF 1110 indicates, in step 2a S1112a, to obtain and report additional information, additional information on each candidate anchor UE (signal strength, capability, known location, etc.) may be reported together to the LMF 1110.
   * If the LMF 1110 has configured a threshold value for a signal strength between the target UE 1100 and the anchor UE in step 2a S1112a, a candidate anchor UE in which a measured signal strength is lower than the threshold may not be reported.
   * If the LMF 1110 has indicated, in step 2a S1112a, to report only a candidate anchor UE supporting a specific capability, the target UE 1100 may identify capability information of each candidate anchor UE in step 2b S1112b, and then report, to the LMF 1100, only a candidate anchor UE that satisfies the condition.
   * If the LMF 1110 has indicated, in step 2a S1112a, to report only a candidate anchor UE that satisfies the condition for known location, the target UE 1100 may identify known location information of each candidate anchor UE in step 2b S1112b, and then report only a candidate anchor UE that satisfies the condition.
- 3. Decide to use SL-P in S1113: The LMF 1110 may determine to use SL-P, based on the positioning capability, sidelinkInformation, and known location information of the target UE 1100, which are obtained in step 1 S1111, and the QoS requirements for the positioning service, which are provided from the AMF 1107 in step 0 S1100.
- 4. Select anchor UE(s) in S1114: If the LMF 1110 determines in step 3 S1113 to use SL-P, an available SL-P location estimation method for location estimation of the target UE 1100 and the anchor UE 1101 to be used for each location estimation method may be determined based on the discovery result reported by the target UE 1100 in step 2 S1112.
- 5. LPP capability/sidelink/location information transfer with candidate anchor UE(s) in S1115: The LMF 1110 may exchange capability, sidelinkInformation, and known location information required for performing SL-P, which are included in the location request message S1110 in step 0, with the anchor UEs 1101 as needed via LPP messages. To this end, LPP message exchanges corresponding to steps S911, S912, S913, S914, S916, and S918 described in the FIG. 9 may be performed.
   * When location estimation of the target UE 1100 is requested by the AMF 1105, and the LMF 1110 performs SL-P for the location estimation of the UE, a separate LPP session may be opened with respect to each anchor UE 1101 to be used for SL-P, and necessary LPP messages may be exchanged.
- 6. Determine configuration for SL-P in S1116: Based on (1) the capability/sidelink/known location information of the target UE 1100/anchor UEs 1101, which are obtained in step 1/step 5 S1111 and S1115, (2) the anchor UE discovery results provided from the target UE 1100 in step 2 S1112a/S1112b/S1112c, and (3) the positioning QoS requirements and the ranging/SL-P requirements given in step 0 S1110, the LMF 1110 may finally determine (1) anchor UEs, (2) a location estimation technique (e.g., an RTT-type solution using an SL, an SL-AoA, an SL-TDOA, or an SL-AoD), (3) a location estimation mode (i.e., standalone, UE-based, or UE-assisted), and (4) specific SL-P operation configurations (e.g., SL-PRS transmission/reception configuration, RTT/TDOA/AoA/AoD measurement, report configuration, etc.), which are to be used.
- 7. SL-P procedure in S1117: The LMF 1110 may indicate the target UE 1100 and the selected anchor UE 1101 to perform the SL-P operation determined in step 6 S1116 and then report results thereof. The target UE 1100 and the anchor UE 1101 may perform the required SL-P operation according to the indication of the LMF 1110, and then report the results thereof to the LMF 1110.
- 8. Location determination in S1118: The LMF 1110 may confirm the result of the location estimation requested by the AMF 1107 in step 0 S1110, based on the results reported from the target UE 1100 and the anchor UE 1101 in step 7 S1117.
- 9. Location response in S1119: The LMF 1110 may transfer the result of performing positioning to the AMF 1107.

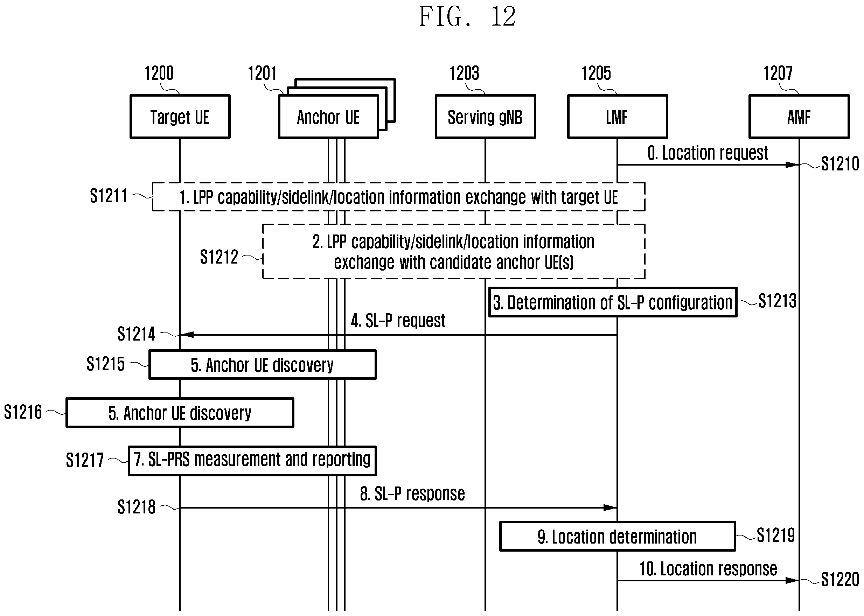

FIG. 12 is a flowchart of a procedure of performing SL-P when an LCS client requests an SL-P operation (e.g., distance and direction estimation between two UEs) between one or more pairs of UEs according to an embodiment of the disclosure.

More specifically, in FIG. 12, descriptions are provided for option 1, that is, a case where an LCS client (e.g., a third-party UE/server, a 5GC NF, etc.) may select anchor UEs, as a method of selecting anchor UEs to be used for SL-P.

Referring to FIG. 12, an AMF 1207 may request an SL-P operation between one or more UE pairs from an LMF 1205, and the LMF 1205 may perform a requested SL-P procedure and then respond with a result thereof to the AMF 1207. To this end, a specific procedure for each step is performed as follows. (However, the order of each step in the following embodiment is not fixed, and the order of each step may change depending on a situation)
- 0. Location request in S1210: The AMF 1207 may initiate a positioning service by transmitting a location request message S1210 for a target UE 1210 to the LMF 1205. The location request message S1210 may include information on QoS requirements (e.g., accuracy and latency) for the positioning service.
   * If a service request for a ranging/SL positioning service, which is transmitted by a LCS client, includes an anchor UE ID, the location request message S1210 may include IDs of one or more anchor UEs 1201 together with an ID of the target UE 1200. Alternatively, if the service request transmitted by the LCS client does not include an anchor UE ID, the AMF 1207 may include, in the location request message S1210, IDs of one or more anchor UEs 1201 that may be used for SL-P to estimate a location of the target UE 1200.
   * For the ranging service, the service request transmitted by the LCS client may include information on a pair of UEs (e.g., UE1 and UE2) that are targets of ranging. In this case, a role of each UE, for example, the target UE or the anchor UE, may not be specified.
   * For the UE ID, a generic public subscription identifier (GPSI) or a subscription permanent identifier (SUPI), which is given in the LCS service request message, may be used as it is, or an SRC L2 ID of each UE, which is used in an SL, may be used.
   * The location request message S1210 for the ranging/SL-P service may include information on ranging/SL-P requirements (requirements for the distance and/or direction between two or more UE pairs, etc.).
   * If there exist positioning capabilities of the target UE 1200/anchor UEs 1201, which have already been obtained, the AMF 1207 may transfer the same to the LMF 1205 via the location request message S1210.
- 1. LPP capability/sidelink/location information transfer with target UE in S1211: The LMF 1205 may exchange capability, sidelinkInformation, and known location information required to perform SL-P, which are included in the location request message S1210 in step 0, with the target UE 1200 as needed via LPP messages. To this end, LPP message exchanges corresponding to steps S911, S912, S913, S914, S916, and S918 described in the FIG. 9 may be performed.
   * If the AMF 1207 has provided the positioning capability of the target UE 1200 in step 0 S1210, step 1 S1211 can be omitted.
- 2. LPP capability/sidelink/location information transfer with candidate anchor UE(s) in S1212: The LMF 1205 may exchange capability, sidelinkInformation, and known location information required for performing SL-P, which is included in the location request message S1210 in step 0, with the anchor UEs 1201 as needed via LPP messages. To this end, LPP message exchanges corresponding to steps S911, S912, S913, S914, S916, and S918 described in the FIG. 9 may be performed.
   * If SL-P is requested for one or more UE pairs in step 0 S1210, each UE may be determined to have a role as the target UE 1200 or the anchor UE 1201. In addition, even before determination of the role, each UE 1200 or 1201 may exchange the capability, sidelinkInformation, and known location information required to perform SL-P with the LMF 1205 via the LPP message exchange corresponding to step 1/step 2 S1211 or S1212.
- 3. Determine configuration for SL-P in S1213: Based on (1) the capability/sidelink/known location information of the target UE 1200/anchor UEs 1201, which are obtained in step 1/step 2S1211 and S1212 and (2) the positioning QoS requirements, anchor UE IDs, and ranging/SL-P requirements given in step 0 S1210, the LMF 1205 may finally determine (1) a location estimation technique (e.g., an RTT-type solution using an SL, an SL-AoA, an SL-TDOA, or an SL-AoD), (2) a location estimation mode (i.e., standalone, UE-based, or UE-assisted), and (3) the role of each UE, which are to be used. If there are multiple available combinations, all possible combinations may be transferred to the UE in step 4 S1214, and the target UE 1200 may make a final determination based on a discovery result. In addition, when transferring combinations of multiple location estimation techniques as in Alt3 below, an indicator for indicating whether positioning results of all the transferred combinations are required or whether results of only some of the combinations are required may be configured by the LMF 1205. In addition, the LMF 1205 may transfer the information (e.g., positioning QoS requirements, anchor UE IDs, ranging/SL-P requirements, etc.) received in step 0 S1210 to the target UE 1200 as it is, and all determinations (e.g., determinations on the location estimation technique, location estimation mode, and each UE role to be used) may be made by the target UE 1200.
   * Specifically, the LMF 1205 may transfer configurations required for performing SL-P to the target UE 1200 by using one of the following methods.
      ** Alt1. Positioning QoS requirement, ranging/SL-P requirement, and list of anchor UEs: The LMF 1205 may transfer, to the target UE 1200, the QoS requirements, the ranging/SL-P requirements, and a list of the anchor UEs to be used (in this case, positioning capability information, sidelink operation information, known location information, etc. for each anchor UE may be provided together) for the positioning service. Based on this, the target UE 1200 may determine the location estimation technique, location estimation mode, and specific operation configurations (e.g., SL-PRS transmission/reception operation, RTT/TDOA/AoA/AoD measurement operation, result reporting operation, etc.) to be used for the ranging/SL-P operation with each anchor UE 1201.
      ** Alt2. Positioning method (w/ mode), and list of anchor UEs:
         The LMF 1205 may transfer one SL-P configuration combination {location estimation technique, location estimation mode, specific operation configuration, anchor UE 101 list to be used} to the target UE 1200. In this case, positioning capability information, sidelink operation information, known location information, etc. for each anchor UE may be provided together. The target UE 1200 may perform an SL-P operation for one SL-P configuration combination provided by the LMF 1205. For example, the LMF 1205 may indicate the target UE 1200 to measure a relative distance with respect to the anchor UE 1201 via the RTT-based location estimation technique, and report the same.
      ** Alt3. List of {positioning method (w/ mode), list of anchor UEs}:
         The LMF 1205 may transfer multiple SL-P configuration combinations {location estimation technique, location estimation mode, specific operation configuration, anchor UE 1201 list to be used} to the target UE 1200. In this case, positioning capability information, sidelink operation information, known location information, etc. for each anchor UE may be provided together. The LMF 1205 may indicate the target UE 1200 to perform an SL-P operation required for one or more of the multiple SL-P configuration combinations provided to the target UE 1200.
   * In the example above, the positioning capability information, sidelink operation information, and known location information may correspond to the information defined in LPP ResponseCapabilities S1012, LPP ProvideSidelinkInformation S1014, and LPP ProvideLocatioInformation S1018 of FIG. 110, respectively.
- 4. SL-P request in S1214: The LMF 1205 may transmit an SL-P request message S1214 to transfer, to the target UE 1200, information on the SL-P configuration combination determined in step 3 S1213. For the SL-P request message, an existing LPP RequestLocationInformation message may be reused, or a new message may be defined. In order to perform SL-P, the following information may be additionally transferred to the target UE 1200. In this case, if there are multiple SL-P configuration combinations transferred by the LMF 1205 as in the case of Alt3 of step 3 S1213, the following information may be reported separately for each combination.
   * SL frequency/BWP and Tx/Rx resource pool: This can be omitted if already provided via system information or pre-configuration.
   * L2 ID of anchor UEs: If information on the anchor UEs determined by the LCS client is transferred to the LMF 1205 in step 0 S1210, DST L2 IDs for groupcast/broadcast of the anchor UEs may be provided so that discovery may be performed only with the corresponding UEs.
   * Positioning service QoS requirement: This information may be included if location estimation technique selection, location estimation mode selection, etc. are all assigned to the target UE 1200.
- 5. Anchor UE discovery in S1215: The target UE 1200 may perform anchor UE discovery based on the configurations received from the LMF 1205 in step 4 S1214. In case of a model A scheme, the target UE 1200 may receive announcement msg transmitted by the anchor UEs 1201. In case of a model B scheme, the anchor UEs 1201 may receive solicitation msg transmitted by the target UE 1200, and then respond to the same.
- 6. Determine configuration for SL-P in S1216: Based on the result of the discovery performed in step 5 S1215 and the information given from the LMF 1205 in the step 4 S1214, the target UE 1200 may finally determine a location estimation technique (e.g., an RTT-type solution using an SL, an SL-AoA, an SL-TDOA, or an SL-AoD), a location estimation mode (i.e., standalone, UE-based, or UE-assisted), specific SL-P operation configurations (e.g., SL-PRS transmission/reception operation, RTT/TDOA/AoA/AoD measurement operation, and result reporting operation), etc. to be used.
   * When the LMF 1205 transfers, in step 3 S1213, multiple SL-P configuration combinations as in Alt3, the UE may select only one of the combinations to perform positioning, or may perform positioning for all or some of the multiple SL-P configuration combinations. (To this end, a reference may be made to the indicator configured by the LMF 1205 in step 3 S1213.)
- 7. SL-PRS measurement & report in S1217: The target UE 1200 and the anchor UEs 1201 may perform required SL-PRS measurement operations according to the SL-P configurations determined in step 6 S1216, and exchange results thereof.
- 8. SL-P response in S1218: The target UE 1200 may report the result of performing SL-P to the LMF 1205 via an SL-P response message S1218. For the SL-P response message S1218, an existing LPP ResponseLocationInformation message may be reused, or a new message may be defined. If the location estimation mode is a UE-based mode, calculated (predicted) location information may be reported, and if the location estimation mode is a UE-assisted mode, a result of measurement may be reported.
- 9. Location determination in S1219: The LMF 1205 may confirm the result of the location estimation requested by the AMF 1207 in step 0 S1210, based on the results reported from the target UE 1200 and the anchor UE 1201 in step 8 S1218.
- 10. Location response in S1220: The LMF 1205 may transfer the result of performing positioning to the AMF 1207.

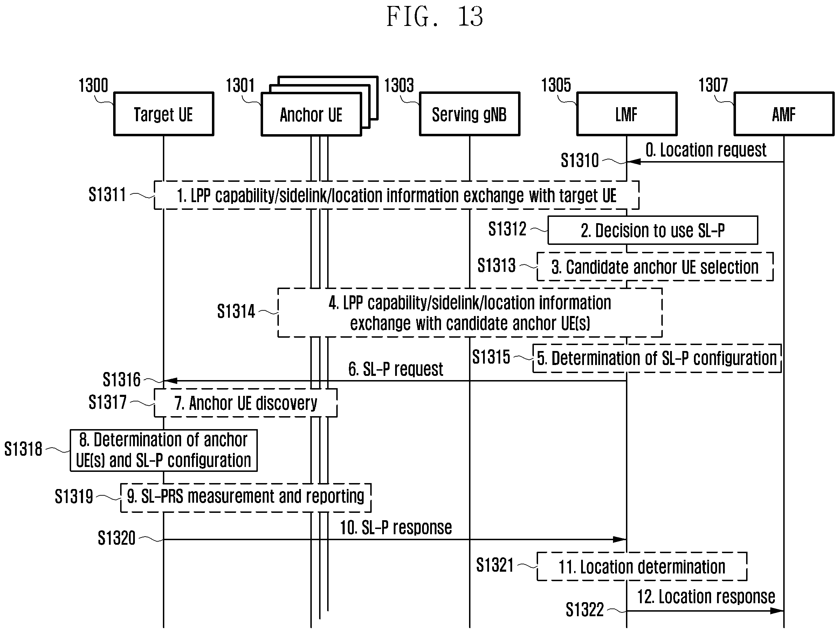

FIG. 13 is a diagram for describing a method of determining a location estimation scheme and an anchor UE to be used for SL-P according to an embodiment of the disclosure.

More specifically, FIG. 13 is a flowchart of a procedure in which, when an LCS client requests location information of a specific target UE, an LMF determines, based on pre-obtained information, a location estimation scheme and candidate anchor UEs to be used for SL-P, and then provides the same to the target UE, and the target UE finally determines the location estimation scheme and anchor UEs to be used. In FIG. 13, descriptions are provided for option 2, that is, a case where a target UE may select anchor UEs by using anchor UE information in an LMF, as a method of selecting anchor UEs to be used for SL-P.

Referring to FIG. 13, an AMF 1307 may request an LMF 1305 to estimate a location of a target UE 1300, and the LMF 1305 may perform the requested location estimation and then respond with a result thereof to the AMF 1307. In this case, the LMF 1305 may determine candidate anchor UEs to be used for SL-P, based on pre-obtained information on available anchor UEs. A specific procedure for each step is as follows. (However, the order of each step in the following embodiment is not fixed, and the order of each step may change depending on a situation)
- 0. Location request in S1310: The AMF 1307 may initiate a positioning service by transmitting a location request message S1310 for the target UE 1310 to the LMF 1305. The location request message S1310 may include information on QoS requirements (e.g., accuracy and latency) for the positioning service.
   * If a service request for a ranging/SL positioning service, which is transmitted by a LCS client, includes an anchor UE ID, the location request message S1310 may include IDs of one or more anchor UEs 1301 together with an ID of the target UE 1300. If the service request transmitted by the LCS client does not include an anchor UE ID, the AMF 1307 may include, in the location request message S1310, IDs of one or more anchor UEs 1301 that may be used for SL-P to estimate the location of the target UE 1300.
   * For the ranging service, the service request transmitted by the LCS client may include information on a pair of UEs (e.g., UE1 and UE2) that are targets of ranging. In this case, a role of each UE, for example, the target UE or the anchor UE, may not be specified.
   * For the UE ID, a generic public subscription identifier (GPSI) or a subscription permanent identifier (SUPI), which is given in the LCS service request message, may be used as it is, or an SRC L2 ID of each UE, which is used in an SL, may be used.
   * The location request message S1310 for the ranging/SL-P service may include information on ranging/SL-P requirements (requirements for the distance and/or direction between two or more UE pairs, etc.).
   * If there exist positioning capabilities of the target UE 1300/anchor UEs 1301, which have already been obtained, the AMF 1307 may transfer the same to the LMF 1305 via the location request message S1310.
- 1. LPP capability/sidelink/location information transfer with target UE in S1311: The LMF 1305 may exchange capability, sidelinkInformation, and known location information required to perform SL-P, which are included in the location request message S1310 in step 0, with the target UE 1300 as needed via LPP messages. To this end, LPP message exchanges corresponding to steps S911, S912, S913, S914, S916, and S918 described in the FIG. 9 may be performed.
   * If the AMF 1307 has provided the positioning capability of the target UE 1300 in step 0 S1310, step 1 S1311 can be omitted.
- 2. Decide to use SL-P in S1312: The LMF 1305 may determine to use SL-P, based on the positioning capability, sidelinkInformation, and known location information of the target UE 1300, which are obtained in step 1 S1311, and the QoS requirements for the positioning service, which are provided from the AMF 1307 in step 0 S1300.
- 3. Choose candidate anchor UE in S1313: If the LMF 1305 determines in step 2 S1312 to use SL-P, an available SL-P location estimation method for location estimation of the target UE 1300 and the available candidate anchor UE 1301 for each location estimation method may be determined based on the pre-obtained information on the available anchor UEs. If the LMF 1305 does not have existing information on the available anchor UEs, this step may be omitted.
   * If the location request message S1300 in step 0 includes the anchor UE ID provided by the LCS client, the LMF 1305 uses a corresponding UE as the candidate anchor UE 1301.
- 4. LPP capability/sidelink/location information transfer with candidate anchor UE(s) in S1314: The LMF 1305 may exchange capability, sidelinkInformation, and known location information required for performing SL-P, which are included in the location request message S1310 in step 0, with the anchor UEs 1301 as needed via LPP messages. To this end, LPP message exchanges corresponding to steps S911, S912, S913, S914, S916, and S918 described in the FIG. 9 may be performed.
   * If SL-P is requested for one or more UE pairs in step 0 S1310, each UE may be determined to have a role as the target UE 1300 or the anchor UE 1301. In addition, even before determination of the role, each UE 1300 or 1301 may exchange the capability, sidelinkInformation, and known location information required to perform SL-P with the LMF 1305 via the LPP message exchange corresponding to step 1/step 2 S1311 or S1312.
- 5. Determine configuration for SL-P in S1313: Based on (1) the capability/sidelink/known location information of the target UE 1300/anchor UEs 1301, which are obtained in step 1/step 4 S1311 and S1314 and (2) the positioning QoS requirements and ranging/SL-P requirements given in step 0 S1110, the LMF 1305 may finally determine (1) a location estimation technique (e.g., an RTT-type solution using an SL, an SL-AoA, an SL-TDOA, or an SL-AoD), (2) a location estimation mode (i.e., standalone, UE-based, or UE-assisted), and (3) a candidate anchor UE combination, which are to be used. If there are multiple available combinations, all possible combinations may be transferred to the UE in step 6 S1316, and the target UE 1300 may make a final determination based on a discovery result. When transferring combinations of multiple location estimation techniques as in Alt5 below, an indicator for indicating whether positioning results of all the transferred combinations are required or whether results of only some of the combinations are required may be configured. In addition, the LMF 1305 may transfer the positioning QoS requirements received in step 0 S1310 to the target UE 1300 as it is, and may cause all determinations (e.g., determinations on the location estimation technique, location estimation mode, and anchor UE to be used) to be made by the target UE 1300.
   * Specifically, the LMF 1305 may transfer configurations required for performing SL-P to the target UE 1300 by using one of the following methods.
      ** Alt1. Positioning QoS: The LMF 1305 may transfer the positioning QoS requirements received in step 0 S1310 to the target UE 1300 as it is, and may cause all determinations (e.g., determinations on the location estimation technique, location estimation mode, and anchor UE to be used) to be made by the target UE 1300.
      ** Alt2. Positioning QoS, and positioning method: The LMF 1305 may provide the target UE 1300 with the available location estimation technique and the positioning QoS requirements received in step 0 S1310. The target UE 1300 may determine the anchor UE, location estimation mode, and specific SL-P operation configurations to be used, by referring to the given positioning QoS requirements.
      ** Alt3. Positioning QoS requirement, ranging/SL-P requirement, and list of anchor UEs: The LMF 1305 may transfer, to the target UE 1300, the QoS requirements and a list of the candidate anchor UEs to be used (in this case, positioning capability information, sidelink operation information, known location information, etc. for each anchor UE may be provided together) for the positioning service. Based on this, the target UE 1300 may determine the location estimation technique, location estimation mode, anchor UE, and specific operation configurations (e.g., SL-PRS transmission/reception operation, RTT/TDOA/AoA/AoD measurement operation, result reporting operation, etc.) to be used for the ranging/SL-P operation with each anchor UE 1301.
      ** Alt4. Positioning method (w/ mode), and list of candidate anchor UEs: The LMF 1305 may transfer one SL-P configuration combination {location estimation technique, location estimation mode, specific operation configuration, candidate anchor UE 101 list to be used} to the target UE 1300. In this case, positioning capability information, sidelink operation information, known location information, etc. for each anchor UE may be provided together. The target UE 1300 may perform an SL-P operation for one SL-P configuration combination provided by the LMF 1305. In this case, the target UE 1300 may perform discovery (step 7 S1317) to select an anchor UE that is actually available from among the candidate anchor UEs provided by the LMF 1305. For example, the LMF 1305 may indicate the target UE 1300 to measure a relative distance with respect to one of the candidate anchor UEs 1/2/3 via an RTT-based location estimation technique and report the same, and the target UE 1300 may select a most appropriate anchor UE from among the candidate anchor UEs via the discovery, and then measure and report the relative distance.
      ** Alt5. List of {positioning method (w/mode), list of candidate anchor UEs}: The LMF 1305 may transfer multiple SL-P configuration combinations {location estimation technique, location estimation mode, specific operation configuration, candidate anchor UE 1301 list to be used} to the target UE 1300. In this case, positioning capability information, sidelink operation information, known location information, etc. for each candidate anchor UE may be provided together. The LMF 1305 may indicate the target UE 1300 to perform an SL-P operation required for one or more of the multiple SL-P configuration combinations provided to the target UE 1300. In this case, the target UE 1300 may perform discovery (step 7 S1317) to select an anchor UE that is actually available from among the candidate anchor UEs provided by the LMF 1305 for each SL-P configuration combination.
   * In the example above, the positioning capability information, sidelink operation information, and known location information may correspond to the information defined in LPP ResponseCapabilities S1012, LPP ProvideSidelinkInformation S1014, and LPP ProvideLocatioInformation S1018 of FIG. 10, respectively.
   * The LMF 1305 may additionally transfer some conditions so that the target UE 1300 may exclude an inappropriate UE from among the candidate anchor UEs. For example, conditions for the signal strength (e.g., RSSI/RSRP/RSRQ/SINR), positioning capability, distance, accuracy/integrity of known location, etc. of the candidate anchor UE obtained during the discovery may be added herein.
- 6. SL-P request in S1316: The LMF 1305 may transmit an SL-P request message S1316 to transfer, to the target UE 1300, information on the SL-P configuration combination determined in step 5 S1315. For the SL-P request message, an existing LPP RequestLocationInformation message may be reused, or a new message may be defined. In order to perform SL-P, the following information may be additionally transferred to the target UE 1300. In this case, if there are multiple SL-P configuration combinations transferred by the LMF 1305 as in the case of Alt5 of step 5 S1315, the following information may be reported separately for each combination.
   * SL frequency/BWP and Tx/Rx resource pool: This can be omitted if already provided via system information or pre-configuration.
   * L2 ID of candidate anchor UEs: If the LMF 1305 determines candidate anchor UEs for each SL-P configuration combination in step 5 S1315, DST L2 IDs for groupcast/broadcast of the anchor UEs may be provided so that discovery may be performed only with the corresponding UEs.
   * Positioning service QoS requirement: This may be included when location estimation technique selection, location estimation mode selection, etc. are all assigned to the target UE 1300.
      ** RSSI/RSRP/RSRQ/SINR threshold: The LMF 1305 may indicate the target UE 1300 not to use a candidate anchor UE in which a signal strength measured during the discovery is equal to or less than a specific threshold.
   * Distance threshold: The LMF 1305 may indicate the target UE 1300 not to use a candidate anchor UE in which a distance from the anchor UE obtained during the discovery is equal to or greater than a specific threshold.
   * Capability condition: The LMF 1305 may indicate the target UE 1300 not to use an anchor UE that does not support a specific location estimation technique/mode, etc., based on the positioning capability information of the candidate anchor UE additionally obtained during the discovery.
   * Known location condition: If the known location of the anchor UE additionally obtained during the discovery differs by a certain level or higher from the known location information provided by the LMF 1305, a certain amount of time has elapsed from a location collected time, information of the known location is no longer valid, or the accuracy/integrity of the known location is a certain level or lower, the LMF 1305 may indicate the target UE 1300 not to use the corresponding candidate anchor UE.
- 7. Anchor UE discovery in S1317: The target UE 1300 may perform anchor UE discovery based on the configurations received from the LMF 1305 in step 6 S1316. In case of a model A scheme, the target UE 1300 may receive announcement msg transmitted by the anchor UEs 1301. In case of a model B scheme, the anchor UEs 1301 may receive solicitation msg transmitted by the target UE 1300, and then respond to the same.
   * If there is a result of discovery that the target UE 1300 has already performed before the current location estimation procedure, this step may be omitted.
- 8. Determine anchor UE(s) and configuration for SL-P in S1318: Based on the result of the discovery performed in step 7 S1315 and the information given from the LMF 1305 in the step 6 S1314, the target UE 1300 may finally determine anchor UEs, a location estimation technique (e.g., an RTT-type solution using an SL, an SL-AoA, an SL-TDOA, or an SL-AoD), a location estimation mode (i.e., standalone, UE-based, or UE-assisted), specific operation configurations (e.g., SL-PRS transmission/reception operation, RTT/TDOA/AoA/AoD measurement operation, and result reporting operation), etc. to be used.
   * When the LMF 1305 transfers, in step 6 S1313, multiple SL-P configuration combinations as in Alt5, the target UE 1300 may select only one of the combinations to perform positioning, or may perform positioning for all or some of the multiple SL-P configuration combinations (to this end, a reference may be made to the indicator configured by the LMF 1305 in step 5 S1315). In this case, the target UE 1300 may perform positioning after determining the anchor UEs and SL-P location estimation method and mode to be used for each combination.
- 9. SL-PRS measurement & report in S1319: The target UE 1300 and the anchor UEs 1301 may perform required SL-PRS measurement operations according to the SL-P configurations determined in step 8 S1318, and exchange results thereof.
- 10. SL-P response in S1320: The target UE 1300 may report the result of performing SL-P to the LMF 1305 via an SL-P response message S1320. For the SL-P response message S1320, an existing LPP ResponseLocationInformation message may be reused, or a new message may be defined. If the location estimation mode is a UE-based mode, calculated (predicted) location information may be reported, and if the location estimation mode is a UE-assisted mode, a result of measurement may be reported.
- 11. Location determination in S1321: The LMF 1305 may confirm the result of the location estimation requested by the AMF 1307 in step 0 S1310, based on the results reported from the target UE 1300 and the anchor UE 1301 in step 10 S1320.
- 12. Location response in S1322: The LMF 1305 may transfer the result of performing positioning to the AMF 1307.

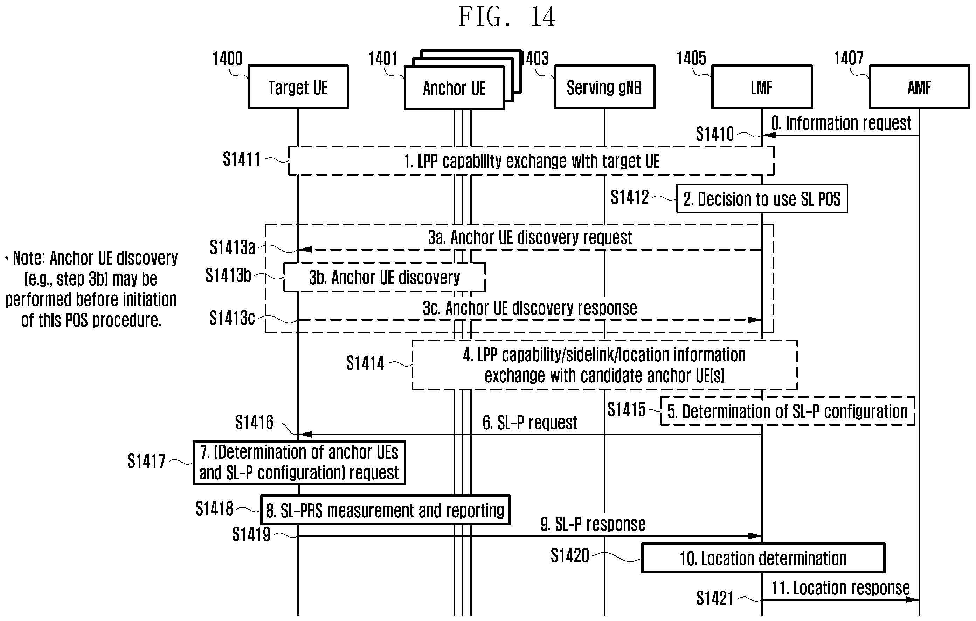

FIG. 14 is a diagram for describing a method of determining a specific location estimation scheme and an anchor UE to be used for SL-P according to an embodiment of the disclosure. More specifically, FIG. 14 is a flowchart of a procedure in which, when an LCS client requests location information of a specific target UE, an LMF determines, based on a result of anchor UE discovery by the target UE, a location estimation scheme and candidate anchor UEs to be used for SL-P, and then provides the same to the target UE, and the target UE finally determines the specific location estimation scheme and anchor UEs to be used. In FIG. 14, descriptions are provided for option 2, that is, a case where a target UE may select anchor UEs without using information in an LMF, as a method of selecting anchor UEs to be used for SL-P.

Referring to FIG. 14, an AMF 1407 may request an LMF 1405 to estimate a location of a target UE 1400, and the LMF 1405 may perform the requested location estimation and then respond with a result thereof to the AMF 1407. In this case, in order to obtain available anchor UE information, the LMF 1405 may indicate the target UE 1400 to perform and determine anchor UE discovery, and may determine available SL-P configurations based on a result thereof. A specific procedure for each step is as follows. (However, the order of each step in the following embodiment is not fixed, and the order of each step may change depending on a situation)
- 0. Location request in S1410: The AMF 1407 may initiate a positioning service by transmitting a location request message S1410 for the target UE 1410 to the LMF 1405. The location request message S1410 may include information on QoS requirements (e.g., accuracy and latency) for the positioning service.
   * If a service request for a ranging/SL positioning service, which is transmitted by a LCS client, includes an anchor UE ID, the location request message S1410 may include IDs of one or more anchor UEs 1401 together with an ID of the target UE 1400. If the service request transmitted by the LCS client does not include an anchor UE ID, the AMF 1407 may include, in the location request message S1410, IDs of one or more anchor UEs 1401 that may be used for SL-P to estimate the location of the target UE 1400.
   * For the ranging service, the service request transmitted by the LCS client may include information on a pair of UEs (e.g., UE1 and UE2) that are targets of ranging. In this case, a role of each UE, for example, the target UE or the anchor UE, may not be specified.
   * For the UE ID, a generic public subscription identifier (GPSI) or a subscription permanent identifier (SUPI), which is given in the LCS service request message, may be used as it is, or an SRC L2 ID of each UE, which is used in an SL, may be used.
   * The location request message S1410 for the ranging/SL-P service may include information on ranging/SL-P requirements (requirements for the distance and/or direction between two or more UE pairs, etc.).
   * If there exist positioning capabilities of the target UE 1400/anchor UEs 1401, which have already been obtained, the AMF 1407 may transfer the same to the LMF 1405 via the location request message S1410.
- 1. LPP capability/sidelink/location information transfer with target UE in S1411: The LMF 1405 may exchange capability, sidelinkInformation, and known location information required to perform SL-P, which are included in the location request message S1410 in step 0, with the target UE 1400 as needed via LPP messages. To this end, LPP message exchanges corresponding to steps S911, S912, S913, S914, S916, and S918 described in the FIG. 9 may be performed.
   * If the AMF 1407 has provided the positioning capability of the target UE 1400 in step 0 S1410, step 1 S1411 can be omitted.
- 2. Decide to use SL-P in S1412: The LMF 1405 may determine to use SL-P, based on the positioning capability, sidelinkInformation, and known location information of the target UE 1400, which are obtained in step 1 S1411, and the QoS requirements for the positioning service, which are provided from the AMF 1407 in step 0 S1400.
- 3. Anchor UE discovery in S1413a/S1413b/S1413c: The LMF 1405 may request anchor UE discovery and selection operations from the target UE 1400. The target UE 1400 may perform the discovery operation in response to the request of the LMF 1405, determine (candidate) anchor UEs, and then report the same to the LMF 1405.
- 3a. Anchor UE discovery request in S1413a: The LMF 1405 may request the anchor UE discovery and selection operations from the target UE 1400. To perform the discovery operation, the anchor UE discovery request S1413a may include the following information.
   * SL frequency/BWP and Tx/Rx resource pool: This information may be omitted if already provided via system information or pre-configuration.
      ** RS SI/RSRP/RSRQ/SINR threshold: The LMF 1405 may indicate the target UE 1400 not to select and not to report a candidate anchor UE in which a signal strength measured during the discovery is equal to or less than a specific threshold.
      ** RSSI/RSRP/RSRQ/SINR report configuration: If the LMF 1405 needs information related to the signal strength between the (candidate) anchor UEs and the target UE 1400 to determine the SL-P configurations, the target UE 1400 may be indicated to measure corresponding values during the discovery and then report the same later.
      ** Distance threshold: The LMF 1405 may indicate the target UE 1400 not to use a candidate anchor UE in which a distance from the anchor UE obtained during discovery is equal to or greater than a specific threshold.
      ** Capability condition: The LMF 1405 may indicate the target UE 1400 not to use an anchor UE that does not support a specific location estimation technique/mode, etc., based on the positioning capability information of the candidate anchor UE additionally obtained during the discovery.
      ** Capability report configuration: When the LMF 1405 is to identify the capabilities of the anchor UEs during the discovery S1413, instead of obtaining the capabilities of the (candidate) anchor UEs via LPP message exchanges in step 4 S1414 below, the LMF 1405 may indicate the target UE 1400 to report the capabilities of the (candidate) anchor UEs.
      ** Known location condition: If the known location of the anchor UE additionally obtained during the discovery differs by a certain level or higher from the known location information provided by the LMF 1405, a certain amount of time has elapsed from a location collected time, information of the known location is no longer valid, or the accuracy/integrity of the known location is a certain level or lower, the LMF 1405 may indicate the target UE 1400 not to use the corresponding candidate anchor UE.
      ** Known location report configuration: When the LMF 1405 is to additionally identify known locations of the (candidate) anchor UEs during the discovery, instead of obtaining the known locations of the (candidate) anchor UEs via LPP message exchanges in step 4 S1414 below, the LMF 1405 may indicate the target UE 1400 to report the known locations of the (candidate) anchor UEs. In this case, the LMF 1405 may indicate to report information, such as the accuracy, integrity, obtained time, and type of the known locations, together with the known locations.
      ** Solicitation msg periodicity/duration/number of Tx (only for model B): When SL discovery mode B is used for discovery for SL-P, the LMF 1405 may configure a periodicity, a transmission duration, the number of transmissions, etc. which the target UE 1400 is to use when transmitting a solicitation message.
      ** Latency requirement on the discovery (e.g., maximum allowable response time for discovery result): The LMF 1405 may configure requirements on latency between a time when the target UE 1400 performs the discovery operation and a time when the target UE 1400 reports a result thereof.
      ** Number of required anchor UE(s): The LMF 1405 may configure the number of anchor UEs required for performing SL-P for location estimation of the target UE 1400. After performing the discovery, the target UE 1400 may select and report as many (candidate) anchor UEs as the number of anchor UEs, which is configured by the LMF 1405, or more.
- 3b. Anchor UE discovery in S1413b: The target UE 1400 and the anchor UE 1402 may perform the discovery operation. In case of a model A scheme, the target UE 1400 may receive announcement msg transmitted by the anchor UEs 1401. In case of a model B scheme, the anchor UEs 1401 may receive solicitation msg transmitted by the target UE 1400, and then respond to the same.
   * If there is a result of discovery that the target UE 1400 has already performed before the location estimation procedure, this step may be omitted.
- 3c. Anchor UE discovery response in S1413c: After performing the discovery operation, the target UE 1400 may select (candidate) anchor UEs that satisfy the conditions configured by the LMF 1405 from among successfully discovered anchor UEs, and may report IDs (e.g., SUPIs) of the corresponding UEs to the LMF 1405.
   * If the LMF 1405 indicates, in step 3a S1413a, to obtain and report additional information, additional information on each of the (candidate) anchor UEs (signal strength, capability, known location, etc.) may be reported together to the LMF 1405.
   * If the LMF 1405 has configured a threshold value for a signal strength between the target UE 1400 and the anchor UE in step 3a S1413a, a (candidate) anchor UE in which a measured signal strength is lower than the threshold may not be selected.
   * If the LMF 1405 has indicated, in step 3a S1413a, to report only a (candidate) anchor UE supporting a specific capability, the target UE 1400 may identify capability information of each (candidate) anchor UE in step 3b S1413b, and then select and report only a (candidate) anchor UE that satisfies the condition.
   * If the LMF 1405 has indicated, in step 3a S1413a, to report only a (candidate) anchor UE that satisfies the condition for known location, the target UE 1400 may identify known location information of each (candidate) anchor UE in step 3b S1413b, and then select and report only a (candidate) anchor UE that satisfies the condition.
- 4. LPP capability/sidelink/location information transfer with candidate anchor UE(s) in S1414: The LMF 1405 may exchange capability, sidelinkInformation, and known location information required for performing SL-P, which are included in the anchor UE discovery response message S1413c in step 3c, with the (candidate) anchor UEs 1401 as needed via LPP messages. To this end, LPP message exchanges corresponding to steps S911, S912, S913, S914, S916, and S918 described in the FIG. 9 may be performed.
- 5. Determine configuration for SL-P in S1413: Based on (1) the capability/sidelink/known location information of the target UE 1400/anchor UEs 1401, which are obtained in step 1/step 4 S1411 and S1414 and (2) the positioning QoS requirements and ranging/SL-P requirements given in step 0 S1410, the LMF 1405 may finally determine (1) a location estimation technique (e.g., an RTT-type solution using an SL, an SL-AoA, an SL-TDOA, or an SL-AoD), (2) a location estimation mode (i.e., standalone, UE-based, or UE-assisted), and (3) a candidate anchor UE combination, which are to be used. If there are multiple available combinations, all possible combinations may be transferred to the UE in step 6 S1416, and the target UE 1400 may make a final determination based on a discovery result. When transferring combinations of multiple location estimation techniques as in Alt5 below, an indicator for indicating whether positioning results of all the transferred combinations are required or whether results of only some of the combinations are required may be configured. In addition, the LMF 1405 may transfer the positioning QoS requirements received in step 0 S1410 to the target UE 1400 as it is, and may cause all determinations (e.g., determinations on the location estimation technique, location estimation mode, and anchor UE to be used) to be made by the target UE 1400.
   * Specifically, the LMF 1405 may transfer configurations required for performing SL-P to the target UE 1400 by using one of the following methods.
      ** Alt1. Positioning QoS: The LMF 1405 may transfer the positioning QoS requirements received in step 0 S1410 to the target UE 1400 as it is, and may cause all determinations (e.g., determinations on the location estimation technique, location estimation mode, and anchor UE to be used) to be made by the target UE 1400.
      ** Alt2. Positioning QoS, and positioning method: The LMF 1405 may provide the target UE 1400 with the available location estimation technique and the positioning QoS requirements received in step 0 S1410. The target UE 1400 may determine the anchor UE, location estimation mode, and specific SL-P operation configurations to be used, by referring to the given positioning QoS requirements.
      ** Alt3. Positioning QoS requirement, ranging/SL-P requirement, and list of anchor UEs: The LMF 1405 may transfer, to the target UE 1400, the QoS requirements and a list of the candidate anchor UEs to be used (in this case, positioning capability information, sidelink operation information, known location information, etc. for each anchor UE may be provided together) for the positioning service. Based on this, the target UE 1400 may determine the location estimation technique, location estimation mode, anchor UE, and specific operation configurations (e.g., SL-PRS transmission/reception operation, RTT/TDOA/AoA/AoD measurement operation, result reporting operation, etc.) to be used for the ranging/SL-P operation with each anchor UE 1401.
      ** Alt4. Positioning method (w/mode) and list of candidate anchor UEs:
         The LMF 1405 may transfer one SL-P configuration combination {location estimation technique, location estimation mode, specific operation configuration, (candidate) anchor UE 101 list to be used} to the target UE 1400. In this case, positioning capability information, sidelink operation information, known location information, etc. for each anchor UE may be provided together. The target UE 1400 may perform an SL-P operation for one SL-P configuration combination provided by the LMF 1405. For example, the LMF 1405 may indicate the target UE 1400 to measure a relative distance with respect to one of the candidate anchor UEs 1/2/3 via an RTT-based location estimation technique and report the same, and the target UE 1400 may select, based on the discovery results in step 3 S1413, a most appropriate anchor UE from among the (candidate) anchor UEs, and then measure and report the relative distance.
      ** Alt5. List of {positioning method (w/mode), list of candidate anchor UEs}:
         The LMF 1405 may transfer multiple SL-P configuration combinations {location estimation technique, location estimation mode, specific operation configuration, (candidate) anchor UE 101 list to be used} to the target UE 1400. In this case, positioning capability information, sidelink operation information, known location information, etc. for each candidate anchor UE may be provided together. The LMF 1405 may indicate the target UE 1400 to perform an SL-P operation required for one or more of the multiple SL-P configuration combinations provided to the target UE 1400.
   * In the example above, the positioning capability information, sidelink operation information, and known location information may correspond to the information defined in LPP ResponseCapabilities S1012, LPP ProvideSidelinkInformation S1014, and LPP ProvideLocatioInformation S1018 of FIG. 10, respectively.
   * The LMF 1405 may additionally transfer some conditions so that the target UE 1400 may exclude an inappropriate UE from among the candidate anchor UEs. For example, conditions for the signal strength (e.g., RSSI/RSRP/RSRQ/SINR), positioning capability, distance, accuracy/integrity of known location, etc. of the candidate anchor UE obtained during the discovery may be added herein.
- 6. SL-P request in S1416: The LMF 1405 may transmit an SL-P request message S1416 to transfer, to the target UE 1400, information on the SL-P configuration combination determined in step 5 S1415. For the SL-P request message, an existing LPP RequestLocationInformation message may be reused, or a new message may be defined. In order to perform SL-P, the following information may be additionally transferred to the target UE 1400. In this case, if there are multiple SL-P configuration combinations transferred by the LMF 1405 as in the case of Alt5 of step 5 S1415, the following information may be reported separately for each combination.
   * SL frequency/BWP and Tx/Rx resource pool: This can be omitted if already provided via system information or pre-configuration.
   * L2 ID of candidate anchor UEs: If the LMF 1405 determines candidate anchor UEs for each SL-P configuration combination in step 5 S1415, DST L2 IDs for groupcast/broadcast of the anchor UEs may be provided so that discovery may be performed only with the corresponding UEs.
   * Positioning service QoS requirement: This may be included when location estimation technique selection, location estimation mode selection, etc. are all assigned to the target UE 1400.
      ** RS SI/RSRP/RSRQ/SINR threshold: The LMF 1405 may indicate the target UE 1400 not to use a candidate anchor UE in which a signal strength measured during the discovery is equal to or less than a specific threshold.
   * Distance threshold: The LMF 1405 may indicate the target UE 1400 not to use a candidate anchor UE in which a distance from the anchor UE obtained during the discovery is equal to or greater than a specific threshold.
   * Capability condition: The LMF 1405 may indicate the target UE 1400 not to use an anchor UE that does not support a specific location estimation technique/mode, etc., based on the positioning capability information of the candidate anchor UE additionally obtained during the discovery.
   * Known location condition: If the known location of the anchor UE additionally obtained during the discovery differs by a certain level or higher from the known location information provided by the LMF 1405, a certain amount of time has elapsed from a location collected time, information of the known location is no longer valid, or the accuracy/integrity of the known location is a certain level or lower, the LMF 1405 may indicate the target UE 1400 not to use the corresponding candidate anchor UE.
- 7. Determine anchor UE(s) and configuration for SL-P in S1417: Based on the result of the discovery performed in step 3b S1413b and the configuration received from the LMF 1405 in the step 6 S1416, the target UE 1400 may finally determine anchor UEs, a location estimation technique (e.g., an RTT-type solution using an SL, an SL-AoA, an SL-TDOA, or an SL-AoD), a location estimation mode (i.e., standalone, UE-based, or UE-assisted), specific operation configurations (e.g., SL-PRS transmission/reception operation, RTT/TDOA/AoA/AoD measurement operation, and result reporting operation), etc. to be used.
   * When the LMF 1405 transfers, in step 6 S1413, multiple SL-P configuration combinations as in Alt5, the target UE 1400 may select only one of the combinations to perform positioning, or may perform positioning for all or some of the multiple SL-P configuration combinations (to this end, a reference may be made to the indicator configured by the LMF 1405 in step 5 S1415). In this case, the target UE 1400 may determine the anchor UEs and SL-P location estimation method and mode to be used for each combination, and then perform positioning based thereon.
- 8. SL-PRS measurement & report in S1418: The target UE 1400 and the anchor UEs 1401 may perform required SL-PRS measurement operations according to the SL-P configurations determined in step 7 S1417, and exchange results thereof.
- 9. SL-P response in S1419: The target UE 1400 may report the result of performing SL-P to the LMF 1405 via an SL-P response message S1419. For the SL-P response message S1419, an existing LPP ResponseLocationInformation message may be reused, or a new message may be defined. If the location estimation mode is a UE-based mode, calculated (predicted) location information may be reported, and if the location estimation mode is a UE-assisted mode, a result of measurement may be reported.
- 10. Location determination in S1420: The LMF 1405 may confirm the result of the location estimation requested by the AMF 1407 in step 0 S1410, based on the results reported from the target UE 1400 and the anchor UE 1401 in step 9 S1419.
- 11. Location response in S1421: The LMF 1405 may transfer the result of performing positioning to the AMF 1407.

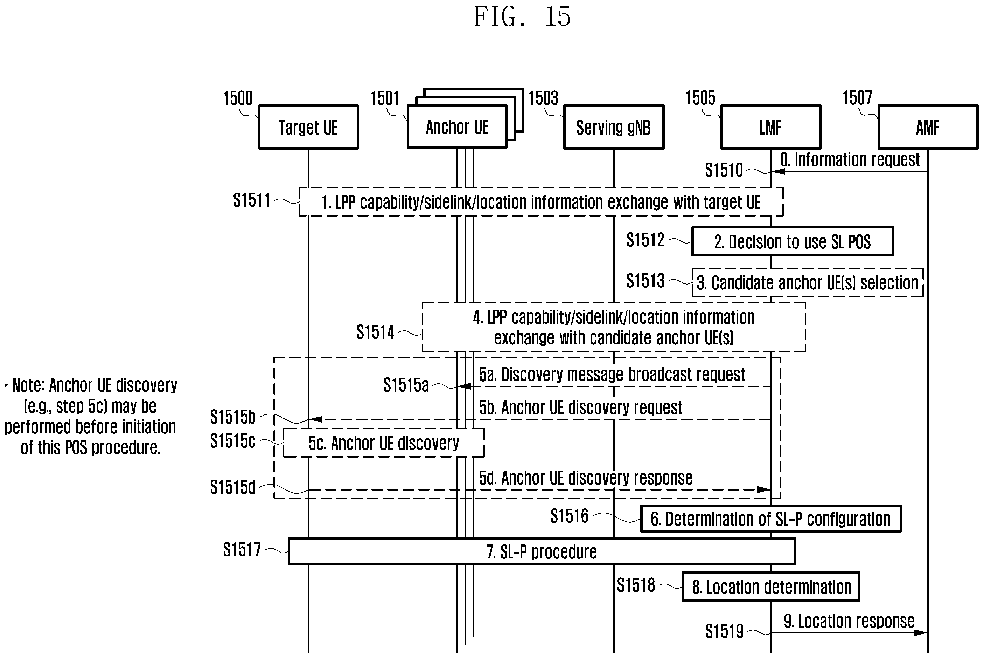

FIG. 15 is a flowchart of a procedure in which an LMF determines a location estimation scheme and an anchor UE to be used for SL-P when an LCS client requests location information of a specific target UE according to an embodiment of the disclosure.

More specifically, in FIG. 15, descriptions are provided for option 3, that is, a case where an LMF may select anchor UEs, as a method of selecting anchor UEs to be used for SL-P.

Referring to FIG. 15, an AMF 1507 may request an LMF 1505 to estimate a location of a target UE 1500, and the LMF 1505 may perform the requested location estimation and then respond with a result thereof to the AMF 1507. In this case, based on pre-obtained information of available anchor UEs and an anchor UE discovery result of the target UE 1500, the LMF 1505 may determine an anchor UE and an available SL-P configuration to be used for an SL-P operation. A specific procedure for each step is as follows. (However, the order of each step in the following embodiment is not fixed, and the order of each step may change depending on a situation)
- 0. Location request in S1510: The AMF 1507 may initiate a positioning service by transmitting a location request message S1510 for a target UE 1510 to the LMF 1505. The location request message S1510 may include information on QoS requirements (e.g., accuracy and latency) for the positioning service.
   * If a service request for a ranging/SL positioning service, which is transmitted by a LCS client, includes an anchor UE ID, the location request message S1510 may include IDs of one or more anchor UEs 1501 together with an ID of the target UE 1500. If the service request transmitted by the LCS client does not include an anchor UE ID, the , AMF 1507 may include, in the location request message S1510, IDs of one or more anchor UEs 1501 that may be used for SL-P to estimate the location of the target UE 1500.
   * For the ranging service, the service request transmitted by the LCS client may include information on a pair of UEs (e.g., UE1 and UE2) that are targets of ranging. In this case, a role of each UE, for example, the target UE or the anchor UE, may not be specified.
   * For the UE ID, a generic public subscription identifier (GPSI) or a subscription permanent identifier (SUPI), which is given in the LCS service request message, may be used as it is, or an SRC L2 ID of each UE, which is used in an SL, may be used.
   * The location request message S1510 for the ranging/SL-P service may include ranging/SL-P requirements (requirements for the distance and/or direction between two or more UE pairs, etc.).
   * If there exist positioning capabilities of the target UE 1500/anchor UEs 1501, which have already been obtained, the AMF 1507 may transfer the same to the LMF 1505 via the location request message S1510.
- 1. LPP capability/sidelink/location information transfer with target UE in S1511: The LMF 1505 may exchange capability, sidelinkInformation, and known location information required to perform SL-P, which are included in the location request message S1510 in step 0, with the target UE 1500 as needed via LPP messages. To this end, LPP message exchanges corresponding to steps S911, S912, S913, S914, S916, and S918 described in the FIG. 9 may be performed.
   * If the AMF 1507 has provided the positioning capability of the target UE 1500 in step 0 S1510, step 1 S1511 can be omitted.
- 2. Decide to use SL-P in S1512: The LMF 1505 may determine to use SL-P, based on the positioning capability, sidelinkInformation, and known location information of the target UE 1500, which are obtained in step 1 S1511, and the QoS requirements for the positioning service, which are provided from the AMF 1507 in step 0 S1500.
- 3. Choose candidate anchor UE in S1513: If the LMF 1505 determines in step 2 S1512 to use SL-P, an available SL-P location estimation method for location estimation of the target UE 1500 and the available candidate anchor UE 1501 for each location estimation method may be determined based on the pre-obtained information on the available anchor UEs. If the LMF 1505 does not have existing information on the available anchor UEs, this step may be omitted.
   * If the location request message S1500 in step 0 includes the anchor UE ID provided by the LCS client, the LMF 1505 may use a corresponding UE as the candidate anchor UE 1501.
- 4. LPP capability/sidelink/location information transfer with candidate anchor UE(s) in S1514: The LMF 1505 may exchange capability, sidelinkInformation, and known location information required for performing SL-P, which are included in the location request message S1510 in step 0, with the anchor UEs 1501 as needed via LPP messages. To this end, LPP message exchanges corresponding to steps S911, S912, S913, S914, S916, and S918 described in the FIG. 9 may be performed.
   * If SL-P is requested for one or more UE pairs in step 0 S1510, each UE may be determined to have a role as the target UE 1500 or the anchor UE 1501. In addition, even before determination of the role, each UE 1500 or 1501 may exchange the capability, sidelinkInformation, and known location information required to perform SL-P with the LMF 1505 via the LPP message exchange corresponding to step 1/step 2 S1511 or S1512.
- 5. Anchor UE discovery in S1515a/S1515b/S1515c: The LMF 1505 may request a discovery operation from the target UE 1500/anchor UE 1501 in order to identify whether an SL-P operation via a sidelink between the target UE 1500 and the candidate anchor UE is actually possible. In this example, an assumption has been made for a scheme (model A) in which the LMF 1505 requests the candidate anchor UE to transmit an announcement message, and the target UE 1500 receives the message. However, a scheme (model B) in which the target UE 1500 transmits a solicitation message, and the candidate anchor UE transmits a response message is also available. If the LMF 1505 does not require an additional discovery operation of the target UE 1500, step 5 S1515a/S1515b/S1515c may be omitted, and the anchor UE, location estimation technique, location estimation mode, SL-P operation configurations, etc. to be used may be determined in step 6 S1516 based on the pre-obtained information (e.g., positioning QoS requirements, capability/sidelink/know location information on the target UE and the candidate anchor UE, etc.).
- 5a. Discovery message broadcast request in S1515a: The LMF 1505 may request the one or more candidate anchor UEs 1501 to transmit an announcement message for discovery. During the request, the LMF 1505 may provide the following information in relation to announcement message transmission.
   ** SL frequency/BWP and Tx/Rx resource pool (this can be omitted if already provided via system information)
   ** Announcement message transmission periodicity, transmission duration, and the number of transmissions
      * In addition, when the LMF 1505 is to identify information on the candidate anchor UEs during the discovery, instead of obtaining the capability/sidelink/known location information of the candidate anchor UEs via the LPP message exchanges in step 4 S1514, the LMF 1505 may indicate the candidate anchor UEs 1501 to transmit SL-P related capability/sidelink/known location information by including the same in the announcement message.
      * If the model B scheme is used, procedure 5a may be omitted.
- 5b. Anchor UE discovery request in S1515b: The LMF 1505 may request the anchor UE discovery operation from the target UE 1501. In order to perform the discovery operation, the following information may be included in the anchor UE discovery request.
   * SL frequency/BWP and Tx/Rx resource pool: This can be omitted if already provided via system information or pre-configuration.
      ** RSSI/RSRP/RSRQ/SINR threshold: The LMF 1505 may indicate the target UE 1500 not to select and not to report a candidate anchor UE in which a signal strength measured during the discovery is equal to or less than a specific threshold.
      ** RSSI/RSRP/RSRQ/SINR report configuration: If the LMF 1505 needs information related to the signal strength between the (candidate) anchor UEs and the target UE 1500 to determine the SL-P configurations, the target UE 100 may be indicated to measure corresponding values during the discovery and then report the same later.
      ** Distance threshold: The LMF 1505 may indicate the target UE 1500 not to use a candidate anchor UE in which a distance from the anchor UE obtained during discovery is equal to or greater than a specific threshold.
      ** Capability condition: The LMF 1505 may indicate the target UE 1500 not to use an anchor UE that does not support a specific location estimation technique/mode, etc., based on the positioning capability information of the candidate anchor UE additionally obtained during the discovery.
      ** Capability report configuration: When the LMF 1505 is to identify the capabilities of the anchor UEs during the discovery S1513, instead of obtaining the capabilities of the (candidate) anchor UEs via LPP message exchanges in step 4 S1514 below, the LMF 1505 may indicate the target UE 1500 to report the capabilities of the (candidate) anchor UEs.
      ** Known location condition: If the known location of the anchor UE additionally obtained during the discovery differs by a certain level or higher from the known location information provided by the LMF 1505, a certain amount of time has elapsed from a location collected time, information of the known location is no longer valid, or the accuracy/integrity of the known location is a certain level or lower, the LMF 1505 may indicate the target UE 1500 not to use the corresponding candidate anchor UE.
      ** Known location report configuration: When the LMF 1505 is to additionally identify known locations of the (candidate) anchor UEs during the discovery, instead of obtaining the known locations of the (candidate) anchor UEs via LPP message exchanges in step 4 S1514 below, the LMF 1505 may indicate the target UE 1500 to report the known locations of the (candidate) anchor UEs. In this case, the LMF 1505 may indicate to report information, such as the accuracy, integrity, obtained time, and type of the known locations, together with the known locations.
      ** Solicitation msg periodicity/duration/number of Tx (only for model B): When SL discovery mode B is used for discovery for SL-P, the LMF 1505 may configure a periodicity, a transmission duration, the number of transmissions, etc. which the target UE 1500 is to use when transmitting a solicitation message.
      ** Latency requirement on the discovery (e.g., maximum allowable response time for discovery result): The LMF 1505 may configure requirements on latency between a time when the target UE 1500 performs the discovery operation to a time when the target UE 1500 reports a result thereof.
      ** Number of required anchor UE(s): The LMF 1505 may configure the number of anchor UEs required for performing SL-P for location estimation of the target UE 1500. After performing the discovery, the target UE 1500 may select and report as many (candidate) anchor UEs as the number of anchor UEs, which is configured by the LMF 1505, or more.
   * DST L2 ID of candidate anchor UEs: If the LMF 1505 determines specific UEs as candidate anchor UEs in step 3 S1513, DST L2 IDs for groupcast and broadcast of the candidate anchor UEs may be provided so that discovery may be performed only with the corresponding UEs.
- 5c. Anchor UE discovery in S1515c: The target UE 1500 and the anchor UE 1502 may perform discovery operations. In case of a model A scheme, the target UE 1500 may receive announcement messages transmitted by the anchor UEs 1501. In case of a model B scheme, the anchor UEs 1501 may receive a solicitation message transmitted by the target UE 1500, and then respond to the same.
   * If there is a result of discovery that the target UE 1500 has already performed before the location estimation procedure, this step may be omitted.
- 5d. Anchor UE discovery response in S1515d: After performing the discovery operation, the target UE 1500 may select (candidate) anchor UEs that satisfy the conditions configured by the LMF 1505 from among successfully discovered anchor UEs, and may report IDs (e.g., SUPIs) of the corresponding UEs to the LMF.
   * If the LMF 1505 indicates, in step 5b S1515b, to obtain and report additional information, additional information on each of the (candidate) anchor UEs (signal strength, capability, known location, etc.) may be reported together to the LMF 1505.
   * If the LMF 1505 has configured a threshold value for a signal strength between the target UE 1500 and the anchor UE in step 5b S1515b, a (candidate) anchor UE in which a measured signal strength is lower than the threshold may not be selected.
   * If the LMF 1505 has indicated, in step 5b S1515b, to report only a (candidate) anchor UE supporting a specific capability, the target UE 1500 may identify capability information of each (candidate) anchor UE in step 5c S1515c, and then select and report only a (candidate) anchor UE that satisfies the condition.
   * If the LMF 1505 has indicated, in step 5b S1515b, to report only a (candidate) anchor UE that satisfies the condition for known location, the target UE 1500 may identify known location information of each (candidate) anchor UE in step 5c S1515c, and then select and report only a (candidate) anchor UE that satisfies the condition.
- 6. Determine configuration for SL-P in S1516: Based on (1) the capability/sidelink/known location information of the target UE 1500/anchor UEs 1501, which are obtained in step 1/step 4 S1511 and S1514, (2) the anchor UE discovery results provided from the target UE 1500 in step 5 S1515a/S1515b/S1515c/S1515d, and (3) the positioning QoS requirements and the ranging/SL-P requirements given in step 0 S1510, the LMF 1505 may finally determine (1) anchor UEs, (2) a location estimation technique (e.g., an RTT-type solution using an SL, an SL-AoA, an SL-TDOA, or an SL-AoD), (3) a location estimation mode (i.e., standalone, UE-based, or UE-assisted), and (4) specific SL-P operation configurations (e.g., SL-PRS transmission/reception configuration, RTT/TDOA/AoA/AoD measurement, report configuration, etc.), which are to be used.
- 7. SL-P procedure in S1517: The LMF 1505 may indicate the target UE 1500 and the selected anchor UE 1501 to perform the SL-P operation determined in step 6 S1516 and then report results thereof. The target UE 1500 and the anchor UE 1501 may perform the required SL-P operation according to the indication of the LMF 1505, and then report the results thereof.
- 8. Location determination in S1518: The LMF 1505 may confirm the result of the location estimation requested by the AMF 1507 in step 0 S1510, based on the results reported from the target UE 1500 and the anchor UE 1501 in step 7 S1517.
- 9. Location response in S1519: The LMF 1505 may transfer the result of performing positioning to the AMF 1507.

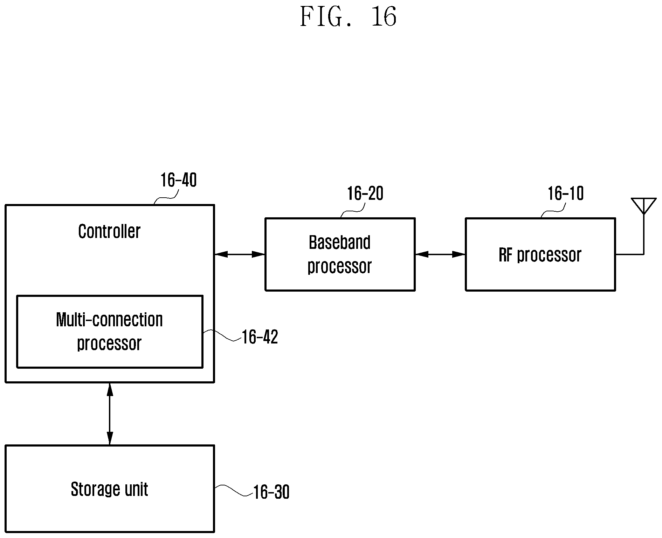

FIG. 16 is a diagram illustrating a UE device according to an embodiment of the disclosure. Referring to FIG. 16, a UE may include a radio frequency (RF) processor 16-10, a baseband processor 16-20, a storage unit 16-30, and a controller 16-40. The components of the UE are not limited to the exemplary components illustrated in FIG. 16, and may include fewer components or more components than the components illustrated in FIG. 16.

The RF processor 16-10 may perform a function for signal transmission and reception via a wireless channel, such as band switching and amplification of a signal. For example, the RF processor 16-10 may up-convert a baseband signal provided from the baseband processor 16-20 into an RF band signal, transmit the converted RF band signal via an antenna, and then down-convert the RF band signal received via the antenna into a baseband signal. For example, the RF processor 16-10 may include a transmission filter, a reception filter, an amplifier, a mixer, an oscillator, a digital-to-analog converter (DAC), an analog-to-digital converter (ADC), etc. but is not limited thereto. In FIG. 2, only one antenna is illustrated, but the UE may have multiple antennas. In addition, the RF processor 16-10 may include multiple RF chains. Furthermore, the RF processor 16-10 may perform beamforming. For beamforming, the RF processor 16-10 may adjust phases and magnitudes of respective signals transmitted and received via multiple antennas or antenna elements. In addition, the RF processor 16-10 may perform MIMO, and may receive multiple layers when performing an MIMO operation.

The baseband processor 16-20 may perform a function of conversion between a baseband signal and a bit string according to a physical layer specification of the system. For example, during data transmission, the baseband processor 16-20 may generate complex symbols by encoding and modulating a transmission bit string. In addition, during data reception, the baseband processor 2-20(16-20) may reconstruct a reception bit string via demodulation and decoding of a baseband signal provided from the RF processor 16-10. For example, when conforming to an orthogonal frequency division multiplexing (OFDM) scheme, during data transmission, the baseband processor 16-20 may generate complex symbols by encoding and modulating a transmission bit string, map the generated complex symbols to sub-carriers, and then configure OFDM symbols via an inverse fast Fourier transform (IFFT) operation and cyclic prefix (CP) insertion. In addition, during data reception, the baseband processor 16-20 may divide the baseband signal provided from the RF processor 16-10 in units of OFDM symbols, reconstruct the signals mapped to the sub-carriers via a fast Fourier transform (FFT) operation, and then reconstruct the reception bit string via demodulation and decoding.

The baseband processor 16-20 and the RF processor 16-10 may transmit and receive signals as described above. Accordingly, the baseband processor 16-20 and the RF processor 16-10 may be referred to as a transmitter, a receiver, a transceiver, or a communication unit. Furthermore, at least one of the baseband processor 16-20 and the RF processor 16-10 may include multiple communication modules to support multiple different radio access technologies. In addition, at least one of the baseband processor 16-20 and the RF processor 16-10 may include different communication modules to process signals of different frequency bands. For example, the different radio access technologies may include a wireless LAN (e.g., IEEE 802.11), a cellular network (e.g., LTE), and the like. In addition, the different frequency bands may include a super-high frequency (SHF) (e.g., 2.NRHz or NRhz) band, and a millimeter (mm) wave (e.g., 60 GHz) band. The UE may transmit signals to and receive signals from a gNB by using the baseband processor 16-20 and the RF processor 16-10, and the signals may include control information and data.

The storage unit 16-30 may store data, such as a basic program, an application program, and configuration information for UE operations. For example, the storage unit 16-30 may store data information, such as a basic program, an application program, and configuration information for UE operations. In addition, the storage unit 16-30 may provide stored data in response to a request of the controller 16-40.

The storage unit 16-30 may include storage media, such as a ROM, a RAM, a hard disk, a CD-ROM, and a DVD, or a combination of the storage media. In addition, the storage unit 16-30 may include multiple memories. According to an embodiment of the disclosure, the storage unit 16-30 may store a program for performing a handover method according to the disclosure. The controller 16-40 may control overall operations of the UE. For example, the controller 16-40 may transmit and receive signals via the baseband processor 16-20 and the RF processor 16-10.

In addition, the controller 16-40 may record and read data in the storage unit 16-30. To this end, the controller 16-40 may include at least one processor. For example, the controller 16-40 may include a communication processor (CP) configured to perform control for communication and an application processor (AP) configured to control a higher layer, such as an application program. In addition, according to an embodiment of the disclosure, the controller 16-40 may include a multi-connection processor 16-42 configured to process a process operating in a multi-connection mode. In addition, at least one component in the UE may be implemented in a single chip.

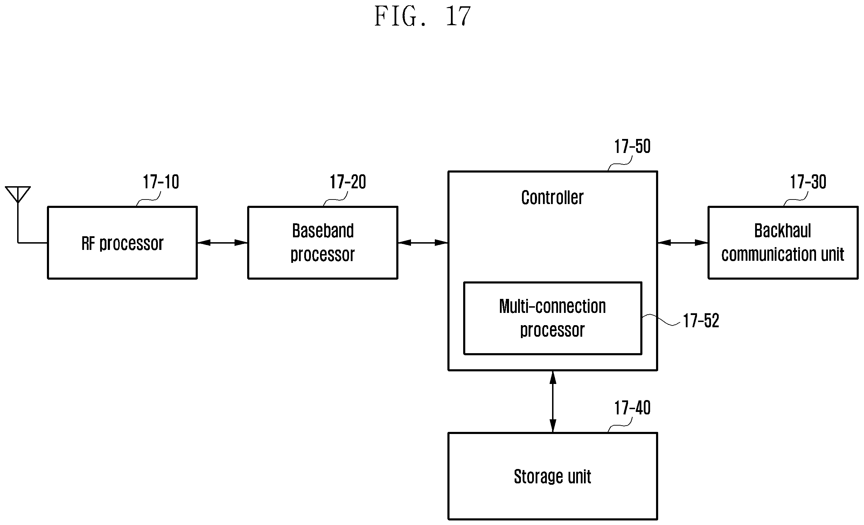

FIG. 17 is a diagram illustrating a base station device according to an embodiment of the disclosure.

A base station of FIG. 17 may be included in the aforementioned network, and a transmission and reception point (TRP) may also correspond thereto.

As illustrated in FIG. 17, the base station may include an RF processor 17-10, a baseband processor 17-20, a backhaul communication unit 17-30, a storage unit 17-40, and a controller 17-50. The components of the base station are not limited to the exemplary components illustrated in FIG. 17, and the base station may include fewer components or more components than the components illustrated in FIG. 17. The RF processor 17-10 may perform a function for signal transmission and reception via a wireless channel, such as band switching and amplification of a signal. For example, the RF processor 17-10 may up-convert a baseband signal provided from the baseband processor 17-20 into an RF band signal, transmit the converted RF band signal via an antenna, and then down-convert the RF band signal received via the antenna into a baseband signal. For example, the RF processor 17-10 may include a transmission filter, a reception filter, an amplifier, a mixer, an oscillator, a DAC, an ADC, and the like. In FIG. 17, only one antenna is illustrated, but the RF processor 17-10 may have multiple antennas. In addition, the RF processor 17-10 may include multiple RF chains. Furthermore, the RF processor 17-10 may perform beamforming. For beamforming, the RF processor 17-10 may adjust phases and magnitudes of respective signals transmitted and received via multiple antennas or antenna elements. The RF processor 17-10 may perform a downlink MIMO operation by transmitting one or more layers.

The baseband processor 17-20 may perform a function of conversion between a baseband signal and a bit string according to a physical layer specification. For example, during data transmission, the baseband processor 17-20 may generate complex symbols by encoding and modulating a transmission bit string. In addition, during data reception, the baseband processor 17-20 may reconstruct a reception bit string via demodulation and decoding of a baseband signal provided from the RF processor 17-10. For example, when conforming to an OFDM scheme, during data transmission, the baseband processor 17-20 may generate complex symbols by encoding and modulating a transmission bit string, map the generated complex symbols to sub-carriers, and then configure OFDM symbols via an IFFT operation and CP insertion. In addition, during data reception, the baseband processor 17-20 may divide the baseband signal provided from the RF processor 17-10 in units of OFDM symbols, reconstruct the signals mapped to the sub-carriers via an FFT operation, and then reconstruct the reception bit string via demodulation and decoding. The baseband processor 17-20 and the RF processor 17-10 may transmit and receive signals as described above. Accordingly, the baseband processor 17-20 and the RF processor 17-10 may be referred to as a transmitter, a receiver, a transceiver, a communication unit, or a wireless communication unit. The base station may transmit signals to and receive signals from a UE by using the baseband processor 17-20 and the RF processor 17-10, and the signals may include control information and data. The backhaul communication unit 17-30 may provide an interface to perform communication with other nodes within a network. For example, the backhaul communication unit 17-30 may convert, into a physical signal, a bit string transmitted from the main base station to another node, for example, an auxiliary base station, a core network, etc., and may convert a physical signal received from another node into a bit string.

The storage unit 17-40 may store data, such as a basic program, an application program, and configuration information for operations of the main base station. For example, the storage unit 17-40 may store information on a bearer assigned to a connected UE, a measurement result reported from the connected UE, and the like. Additionally, the storage unit 17-40 may store information serving as criteria for determining whether to provide the UE with multiple connections or to suspend multiple connections. In addition, the storage unit 17-40 may provide stored data in response to a request of the controller 17-50. The storage unit 17-40 may include storage media, such as a ROM, a RAM, a hard disk, a CD-ROM, and a DVD, or a combination of the storage media. In addition, the storage unit 17-40 may include multiple memories. According to an embodiment of the disclosure, the storage unit 17-40 may store a program for performing handover according to the disclosure.

The controller 17-50 may control overall operations of the main base station. For example, the controller 17-50 may transmit and receive signals via the baseband processor 17-20 and the RF processor 17-10 or via the backhaul communication unit 17-30. In addition, the controller 17-50 may record and read data in the storage unit 17-40. To this end, the controller 17-50 may include at least one processor. In addition, according to an embodiment of the disclosure, the controller 17-50 may include a multi-connection processor 17-52 configured to process a process operating in a multi-connection mode.

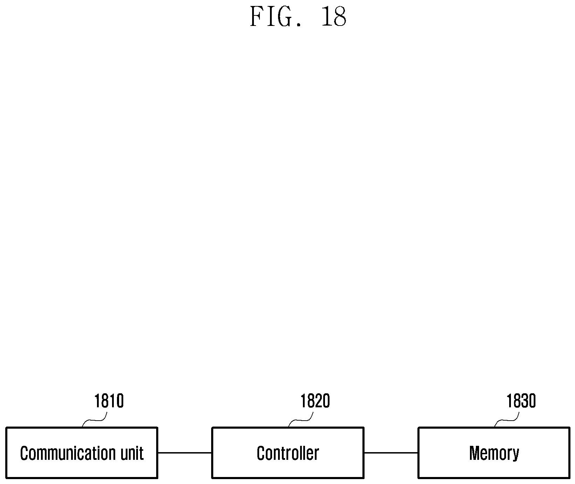

FIG. 18 is a block diagram associated with a structure of an LMF entity according to an example of the disclosure.

Referring to FIG. 18, an LMF entity according to an embodiment of the disclosure may include a communication unit 1810, a controller 1820, and a memory 1830. The communication unit 1810, the controller 1820, and the storage unit 1830 may operate according to a communication method of the LMF entity described above. However, the components of the LMF entity are not limited to the example described above. For example, the LMF entity may include more components or fewer components than the aforementioned components. For example, the LMF entity may include the communication unit 1810 and the controller 1820, and the communication unit 1810 may additionally include a backhaul communication unit for communication with another network entity. In addition, the communication unit 1810, the controller 1820, and the memory 1830 may be implemented in the form of a single chip.

The communication unit 1810 collectively refers to the receiver and the transmitter of the LMF entity, and may transmit messages to and receive messages from another network node, base station, etc. The communication unit 1810 may transmit a request message or a response message to a base station, for example, via a predetermined interface. The communication unit 1810 may include various configurations for transmitting and receiving signals, output a received signal to the controller 1820, and transmit a signal output from the controller 1820. In addition, the communication unit 1810 may receive a communication signal and output the same to a processor, and may transmit a signal output from the processor to another network entity via a network.

The memory 1830 may store data, such as a basic program, an application program, and configuration information, required for operations of the LMF entity. In addition, the memory 1830 may provide stored data in response to a request of the controller 1820.

In the disclosure, the controller 1820 may be defined as a circuit, an application-specific integrated circuit, or at least one processor. The processor may include a communication processor (CP) configured to perform control for communication, and an application processor (AP) configured to control a higher layer, such as an application program. The controller 1820 may control overall operations of the LMF entity according to the embodiment proposed in the disclosure. For example, the controller 1820 may control signal flows between respective blocks to perform operations according to the aforementioned flowcharts.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein. These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the disclosure, the term "computer program product" or "computer readable medium" is used to generally refer to a medium such as a memory, a hard disk installed in a hard disk drive, or a signal. The "computer program product" or "computer readable medium" is an element that is provided to a method for reporting UE capability in a wireless communication system according to the disclosure.

The machine-readable storage medium may be provided in the form of a non-transitory storage medium. Wherein, the term "non-transitory storage medium" simply means that the storage medium is a tangible device, and does not include a signal (e.g., an electromagnetic wave), but this term does not differentiate between where data is semi-permanently stored in the storage medium and where the data is temporarily stored in the storage medium. As an example, the "non-transitory storage medium" may include a buffer in which data is temporarily stored According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least a part of the computer program product (e.g., a downloadable app) may be temporarily generated or at least temporarily stored in the machine-readable storage medium, such as memory of the manufacturer's server, a server of the application store, or a relay server.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may be applied to other communication systems and other variants based on the technical idea of the embodiments may also be implemented. For example, the embodiments may be applied to LTE, 5G, NR, or 6G systems. Therefore, the scope of the disclosure should not be defined as being limited to the embodiments set forth herein, but should be defined by the appended claims and equivalents thereof.

## Claims

1. A method of a location management function (LMF) entity in a communication system, the method comprising:
receiving, from an access and mobility management function (AMF) entity, a request message requesting a location of a target terminal related to a sidelink positioning (SL-P) procedure;
transmitting, to the target terminal, a discovery request message requesting discovery of an anchor terminal;
receiving, from the target terminal, a discovery response message comprising information on candidate anchor terminals, in response to the discovery request message; and
selecting at least one anchor terminal for performing the SL-P procedure from among the candidate anchor terminals.

2. The method of claim 1, wherein the discovery request message comprises configuration information related to a discovery operation and information for configuring a reporting condition for the candidate anchor terminals, and
wherein the reporting condition comprises at least one of a first threshold value of a signal strength measured in the discovery operation, a second threshold value relating to distances between the target terminal and the candidate anchor terminals, a condition relating to capability information of the candidate anchor terminals, or an accuracy requirement for known locations of the candidate anchor terminals.

3. The method of claim 2, wherein the reporting condition comprises information indicating reporting of the signal strength, and
wherein the discovery response message further comprises information on signal strength values of the candidate anchor terminals.

4. The method of claim 1, comprising exchanging additional information with each of the at least one anchor terminal via a long-term evolution (LTE) positioning protocol (LPP) session with each of the at least one anchor terminal,
wherein the additional information comprises capability information of each of the at least one anchor terminal required for the SL-P procedure.

5. A method of a target terminal in a communication system, the method comprising:
receiving, from a location management function (LMF) entity, a discovery request message requesting discovery of an anchor terminal related to a sidelink positioning (SL-P) procedure;
performing a discovery operation, based on the discovery request message; and
transmitting, to the LMF entity, a discovery response message in response to the discovery request message, the discovery response message comprising information on candidate anchor terminals based on the discovery operation.

6. The method of claim 5, wherein the discovery request message comprises configuration information related to the discovery operation and information for configuring a reporting condition for the candidate anchor terminals, and
wherein the reporting condition comprises at least one of a first threshold value of a signal strength measured in the discovery operation, a second threshold value relating to distances between the target terminal and the candidate anchor terminals, a condition relating to capability information of the candidate anchor terminals, or an accuracy requirement for known locations of the candidate anchor terminals.

7. The method of claim 6, wherein the reporting condition comprises information indicating reporting of the signal strength, and
wherein the discovery response message further comprises information on signal strength values of the candidate anchor terminals.

8. The method of claim 5, comprising:
receiving, from the LMF entity, a message indicating to perform the SL-P procedure with at least one anchor terminal selected from among the candidate anchor terminals; and
performing the SL-P procedure based on the message.

9. A location management function (LMF) entity in a communication system, the LMF entity comprising:
a communication unit; and
a controller configured to control the communication unit to receive, from an access and mobility management function (AMF) entity, a request message requesting a location of a target terminal related to a sidelink positioning (SL-P) procedure, control the communication unit to transmit, to the target terminal, a discovery request message requesting discovery of an anchor terminal, control the communication unit to receive, from the target terminal, a discovery response message comprising information on candidate anchor terminals, in response to the discovery request message, and select at least one anchor terminal for performing the SL-P procedure from among the candidate anchor terminals.

10. The LMF entity of claim 9, wherein the discovery request message comprises configuration information related to a discovery operation and information for configuring a reporting condition for the candidate anchor terminals, and
wherein the reporting condition comprises at least one of a first threshold value of a signal strength measured in the discovery operation, a second threshold value relating to distances between the target terminal and the candidate anchor terminals, a condition relating to capability information of the candidate anchor terminals, or an accuracy requirement for known locations of the candidate anchor terminals.

11. The LMF entity of claim 10, wherein the reporting condition comprises information indicating reporting of the signal strength, and
wherein the discovery response message comprises information on signal strength values of the candidate anchor terminals.

12. The LMF entity of claim 9, wherein the controller is configured to exchange additional information with each of the at least one anchor terminal via a long-term evolution (LTE) positioning protocol (LPP) session with each of the at least one anchor terminal, and
wherein the additional information comprises capability information of each of the at least one anchor terminal required for the SL-P procedure.

13. A target terminal in a communication system, the terminal comprising:
a transceiver; and
a controller configured to control the transceiver to receive, from a location management function (LMF) entity, a discovery request message requesting discovery of an anchor terminal related to a sidelink positioning (SL-P) procedure, perform a discovery operation based on the discovery request message, and control the transceiver to transmit, to the LMF entity, a discovery response message in response to the discovery request message, the discovery response message comprising information on candidate anchor terminals based on the discovery operation.

14. The terminal of claim 13, wherein the discovery request message comprises configuration information related to the discovery operation and information for configuring a reporting condition for the candidate anchor terminals, and
wherein the reporting condition comprises at least one of a first threshold value of a signal strength measured in the discovery operation, a second threshold value relating to distances between the target terminal and the candidate anchor terminals, a condition relating to capability information of the candidate anchor terminals, or an accuracy requirement for known locations of the candidate anchor terminals.

15. The terminal of claim 14, wherein the reporting condition comprises information indicating reporting of the signal strength,
wherein the discovery response message comprises information on signal strength values of the candidate anchor terminals, and
wherein the controller is configured to control the transceiver to receive, from the LMF entity, a message indicating to perform the SL-P procedure with at least one anchor terminal selected from among the candidate anchor terminals, and perform the SL-P procedure based on the message.
